# EUROPEAN PATENT SPECIFICATION

(11) **EP 4 057 385 B1**
(45) Date of publication and mention of the grant of the patent: **19.11.2025**
(21) Application number: 22161017.3
(22) Date of filing: 09.03.2022
(51) Int. Cl.: H01M 4/139, H01M 10/052, H01M 4/02, H01M 4/04, H01M 4/131, H01M 4/1391, H01M 4/36, H01M 4/38, H01M 4/485, H01M 4/505, H01M 4/525

(54) **ELECTRODE STRUCTURE, SECONDARY BATTERY INCLUDING THE SAME, AND METHOD OF FABRICATING THE ELECTRODE STRUCTURE**
ELEKTRODENSTRUKTUR, SEKUNDÄRBATTERIE DAMIT UND VERFAHREN ZUR HERSTELLUNG DER ELEKTRODENSTRUKTUR
STRUCTURE D'ÉLECTRODE, BATTERIE SECONDAIRE LA COMPRENANT, ET PROCÉDÉ DE FABRICATION DE LA STRUCTURE D'ÉLECTRODE

(30) Priority: 09.03.2021 KR 20210030937
(43) Date of publication of application: 14.09.2022
(73) Proprietor: Samsung Electronics Co., Ltd., Suwon-si, Gyeonggi-do 16677 (KR)
(72) Inventor: JEONG, Huisu, 16678, Suwon-si, (KR); SHON, Jeongkuk, 16678, Suwon-si, (KR); KIM, Kyounghwan, 16678, Suwon-si, (KR); PARK, Joungwon, 16678, Suwon-si, (KR); PARK, Hwiyeol, 16678, Suwon-si, (KR); HEO, Jinsuck, 16678, Suwon-si, (KR)
(74) Representative: Elkington and Fife LLP

(56) References cited:
- EP-A1- 3 193 392
- EP-A1- 3 370 280
- WO-A1-2006/027886
- CN-A- 111 244 392
- US-A1- 2021 050 599
- LACEY STEVEN D. ET AL: "Extrusion-Based 3D Printing of Hierarchically Porous Advanced Battery Electrodes", vol. 30, no. 12, 30 March 2018 (2018-03-30), DE, pages 1705651, XP055956644, ISSN: 0935-9648, Retrieved from the Internet <URL:https://onlinelibrary.wiley.com/doi/full-xml/10.1002/adma.201705651> DOI: 10.1002/adma.201705651

## Description

### FIELD OF THE INVENTION

The present disclosure relates to electrode structures, secondary batteries including the electrode structures, and methods of fabricating the electrode structures.

### BACKGROUND OF THE INVENTION

A secondary battery is a battery that may be charged and discharged, unlike a primary battery that cannot be recharged. Secondary batteries are widely used in a variety of electronic devices such as mobile phones, notebook computers, camcorders, etc. Particularly, a lithium secondary battery is advantageous in terms of a higher voltage and a higher energy density per unit weight than a nickel-cadmium battery or a nickel-hydrogen battery, and therefore, the demand for lithium secondary batteries has increased.

As the types of electronic devices to which secondary batteries are applied are diversifying and the relevant markets grow, demands for performance improvement in various aspects, such as energy density, rate capability, stability or durability, and providing flexibility thereof are also increasing. Energy density is associated with increasing the capacity of the secondary battery, and the rate capability is associated with the improvement of a charging rate of the secondary battery.

PCT Patent Application WO 2006/027886 A1 discloses negative electrode for secondary battery comprising an active layer with active particles, the active layer comprising vertical holes, and further collector layers.

US Patent Application US 2021/050599 A1 discloses a high areal capacity loading electrode including a metal current collector with an active material layer, the electrode comprising perforating holes.

Publication "Extrusion-Based 30 Printing of Hierarchically Porous Advanced Battery Electrodes", by Lacey Steven D. et al, in Advanced Materials, vol. 30, no. 12, 30 March 2018 (2018-03-30) discloses methods for 3D printing of battery electrodes comprising a plurality of layers, through an aqueous ink without the use of additives or binders.

Chinese Patent Application CN 111244392 A discloses a preparation method of an electrode sheet capable of improving lithium ion transport capacity.

### SUMMARY OF THE INVENTION

Provided are electrode structures with improved performance.

Provided are secondary batteries with improved performance.

The invention is defined by the claims.

According to an aspect of an embodiment, there is provided an electrode structure according to claim 1.

In particular, it is proposed to make holes (channels) at least in an active material layer (layer III) with a small porosity to facilitate lithium movement when impregnated with an electrolyte. The relatively porous layers (e.g. layers I, and II) need not have the holes, but are not limited thereto. For example, if the layer III has a porosity of 5% and a thickness of 15µm, and the layers I and II have porosities of 30% and 35%, respectively, and thicknesses of 1 µm and 2µm, respectively, the battery may have a high electrode density of 85% or more in total. It may satisfy high rate characteristics while having high electrode density.

By way of further example, with there being a porous layer between the layers of the active material with low porosity, a high-rate characteristic may be satisfied without creating a gap between the holes (or channels) of 30 µm or less.

According to a proposed embodiment, there may be provided three or more layers of active material having two or more different porosity are stacked. Among the stacked active material layers, at least two layers having the smallest porosity may be stacked. At least one layer of an active material having a different porosity may be positioned between the layers having the lowest porosity. In the layer having the smallest porosity, there is may be a hole (channel) drilled in the thickness direction, and the remaining active material layer may not need to have a hole in the thickness direction, but is not limited thereto.

In some configurations, when the active material layers have different porosity, the layer III with the smallest porosity must have holes unconditionally, which means that layers I and II may or may not be present.

The second active materials plate may have a plurality of second penetration holes extending in a thickness direction of the second active material plate, and wherein at least a portion of the plurality of first penetration holes and at least a portion of the plurality of second penetration holes may be aligned in the first direction.

The electrode structure may further include a second active material structure stacked on the first active material structure in the first direction. The second active material structure may include a third active material plate having a plurality of third penetration holes extending in a thickness direction of the third active material plate, and a fourth active material plate on a side of the third active material plate, and at least a portion of the plurality of first penetration holes of the first active material plate and at least a portion of the plurality of third penetration holes may be aligned in the first direction.

The second active material plate may have a plurality of second penetration holes extending in a thickness direction of the second active material plate, the fourth active material plate may have a plurality of fourth penetration holes extending in a thickness direction of the fourth active material plate, at least a portion of the plurality of first penetration holes of the first active material plate and at least a portion of the plurality of second penetration holes of the second active material plate may be not aligned in the first direction, and at least a portion of the plurality of third penetration holes of the third active material plate and at least a portion of the plurality of fourth penetration holes of the fourth active material plate may be not aligned in the first direction.

The electrode structure may further include a second active material structure stacked on the first active material structure in the first direction. The second active material structure may include a third active material plate having a plurality of third penetration holes extending in a thickness direction of the third active material plate, and a fourth active material plates on a side of the third active material plate, and at least a portion of the plurality of first penetration holes of the first active material plate and at least a portion of the plurality of third penetration holes of the third active material plate may be not aligned in the first direction.

The second active material plate may have a plurality of second-penetration holes extending in a thickness direction of the second active material plate, the fourth active material plate may have a plurality of fourth penetration holes extending in a thickness direction of the fourth active material plate, at least a portion of the plurality of first penetration holes of the first active material plate and at least a portion of the plurality of second penetration holes of the second active material plate may be aligned in the first direction, and at least a portion of the plurality of third penetration holes of the third active material plate and at least a portion of the plurality of fourth penetration holes of the fourth active material plate may be aligned in the first orientation.

The electrode structure may further include an additional active material plate having a plurality of additional penetration holes extending in a thickness direction of the additional active material plate, wherein the additional active material plate may be on one or more of an uppermost surface or a lowermost surface of the active material structure.

The first active material plate and the second active material plate may be binder-free.

The second active material plate may include an upper active material plate and a lower active material plate, and the first active material plate, the lower active material plate, and the upper active material plate may be stacked in the first direction.

The first active material plate may have a first porosity, the lower active material plate may have a second porosity, the upper active material plate may have a third porosity, the first porosity may be less than the second porosity, and the first porosity may be less than the third porosity.

The second porosity may be equal to the third porosity, or the second porosity may be less than the third porosity.

The first active material plate, the lower active material plate, and the upper active material plate may include a same positive electrode active material.

At least two of the first active material plate, the lower active material plate, and the upper active material plate may include different positive electrode active materials.

One or more of the first active material plate, the lower active material plate, and the upper active material plate may include a conductive material.

The conductive material may include one or more of Al, Cu, Ni, Co, Cr, W, Mo, Ag, Au, Pt or Pb.

A tortuosity of the plurality of first penetration holes may be about 1 to about 1.5.

A sum of each area of the plurality of first penetration holes on the side of the first active material plate on which the second active material plate is stacked may be about 1% to about 5% of a total area of the side of the first active material plate on which the second active material plate is stacked.

The electrode structure may further include a positive electrode current collecting layer on a side of the active material structure.

According to an aspect of an embodiment, a method of fabricating an electrode structure includes stacking a first active material plate and a second active material plate in a first direction, drilling a plurality of first penetration holes extending in a thickness direction of the first active material plate and a plurality of second penetration holes extending in a thickness direction of the second active material plate, and sintering the first active material plate and the second active material plate to fabricate the electrode structure, wherein the plurality of first penetration holes and the plurality of second penetration holes are arranged to extend in the first direction, and wherein the electrode structure is configured for use in a secondary battery.

A ratio of a sum of volumes of the plurality of first penetration holes to a sum of volumes of pores in the second active material plate may be about 0.2:1 to about 7:1.

A tortuosity of the plurality of first penetration holes may be about 1 to about 1.5.

A sum of each area of the plurality of first penetration holes on a side of the first active material plate perpendicular to the first direction may be about 1% to about 5% of a total area of the side of the first active material plate perpendicular to the first direction.

The method of fabricating an electrode structure may further include arranging a positive electrode current collecting layer on a side of the active material structure perpendicular to the first direction.

The drilling of the plurality of first penetration holes and the plurality of second penetration holes may include a laser drilling.

According to an aspect of an embodiment, a method of fabricating an electrode structure includes drilling a plurality of first penetration holes in a first active material plate, the plurality of the first penetration holes extending in a thickness direction of the first active material plate, stacking a second active material plate on a side of the first active material plate in a first direction to form an active material structure, stacking a plurality of the active material structures, and sintering the plurality of active material structures to fabricate the electrode structure.

The plurality of active material structures may include a second active material structure stacked on the first active material structure in the first direction, the second active material structure including a third active material plate having a plurality of third penetration holes extending in a thickness direction of the third active material plate, and a fourth active material plate on a side of the third active material plate, and at least a portion of the plurality of first-penetration holes of the first active material plate and at least a portion of the plurality of third penetration holes of the third active material plate may be aligned in the first direction.

The plurality of active material structures may include a second active material structure stacked on the first active material structure in the first direction, the second active material structure including a third active material plate having a plurality of third penetration holes extending in a thickness direction of the third active material plate, and a fourth active material plates on a side of the third active material plate, and at least a portion of the plurality of first penetration holes of the first active material plate and at least a portion of the plurality of third penetration holes of the third active material plate may be arranged to not be aligned in the first direction.

The method of fabricating an electrode structure may further include arranging an additional active material plate having a plurality of additional penetration holes extending in a thickness direction of the additional active material plate, wherein the additional active material plate may be arranged on one or more of an uppermost surface or a lowermost surface of the plurality of active material structures.

According to an aspect of an embodiment, a secondary battery includes a first electrode structure, a second electrode structure on the first electrode structure, and a separation membrane between the first electrode structure and the second electrode structure, wherein the first electrode structure includes an active material structure, and the active material structure includes a first active material plate having a plurality of first penetration holes extending in a thickness direction of the first active material plate, and a second active material plate stacked in a first direction on a side of the first active material plate.

The secondary battery may further include a positive electrode current collecting layer on a side of the active material structure.

The secondary battery may include a plurality of the active material structures, and may further include an electrolyte material between active material structures of the plurality of active material structures.

The second active material plate may have a plurality of second penetration holes extending in a thickness direction of the second active material plate, the plurality of first penetration holes and the plurality of second penetration holes may be arranged to extend in the first direction, and a ratio of a sum of volumes of the plurality of first penetration holes to a sum of volumes of pores in the second active material plate may be about 0.2:1 to about 7:1.

The active material structure may include a second active material structure stacked on the first active material structure in the first direction, the second active material structure including a third active material plate having a plurality of third penetration holes extending in a thickness direction of the third active material plate, and a fourth active material plate on a side of the third active material plate, and at least a portion of the plurality of first penetration holes of the first active material plate and at least a portion of the plurality of third penetration holes of the third active material plate may be aligned in the first direction.

The second active material plate may have a plurality of second penetration holes extending in a thickness direction of the second active material plate, the fourth active material plate may have a plurality of fourth penetration holes extending in a thickness direction of the fourth active material plate, at least a portion of the plurality of first penetration holes of the first active material plate and at least a portion of the plurality of second penetration holes of the second active material plate may be not aligned in the first direction, and at least a portion of the plurality of third penetration holes of the third active material plate and at least a portion of the plurality of fourth penetration holes of the fourth active material plate may be not aligned in the first orientation.

The active material structure may include a second active material structure stacked on the first active material structure in the first direction, the second active material structure including a third active material plate having a plurality of third penetration holes extending in a thickness direction of the third active material plate, and a fourth active material plate on a side of the third active material plate, and at least a portion of the plurality of first penetration holes of the first active material plate and at least a portion of the plurality of third penetration holes of the third active material plate may be not aligned in the first direction.

The second active material plate may have a plurality of second penetration holes extending in a thickness direction of the second active material plate, the fourth active material plate may have a plurality of fourth penetration holes extending in a thickness direction of the fourth active material plate, at least a portion of the plurality of first penetration holes of the first active material plate and at least a portion of the plurality of second penetration holes of the second active material plate may be aligned in the first direction, and at least a portion of the plurality of third penetration holes of the third active material plate and at least a portion of the plurality of fourth penetration holes of the fourth active material plate may be aligned in the first orientation.

The secondary battery may further include an additional active material plate having a plurality of additional penetration holes extending in a thickness direction of the additional active material plate, wherein the additional active material plate may be on an uppermost surface of the plurality of active material structures.

The first active material plate and the second active material plate may be binder-free.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a perspective view of an embodiment of a secondary battery;
FIG. 2A is a perspective view of an embodiment of an active material structure;
FIG. 2B is a perspective view of an embodiment of a first active material plate;
FIG. 2C is a plan view of the first active material plate shown in FIG. 2B;
FIG. 2D is a cross-sectional view taken along line A-A of the active material structure shown in FIG. 2A;
FIG. 2E is a scanning electron microscope ("SEM") photograph of an embodiment of an active material structure;
FIG. 2F is an enlarged view of a portion of FIG. 2E;
FIG. 3 is a graph of relative electrode density (percent (%)) versus a ratio of a sum of volumes of a plurality of first penetration holes of the first active material plate ("HV") to a sum of volumes of pores in one or more second active material plates ("PV");
FIG. 4A is a scanning electron microscope photograph of an active material structure according to an embodiment of the present disclosure;
FIG. 4B is a graph of voltage (volts (V)) versus battery capacity (milliampere hours per gram (mAh/g)) of a secondary battery including an embodiment of an active material structure;
FIG. 4C is a scanning electron microscope photograph of an embodiment of an active material structure;
FIG. 4D is a graph of voltage (V) versus battery capacity (mAh/g) of a secondary battery including an embodiment of an active material structure;
FIG. 4E is a scanning electron microscope photograph of an embodiment of an active material structure;
FIG. 4F is a graph of voltage (V) versus battery capacity (mAh/g) of a secondary battery including an embodiment of an active material structure;
FIG. 5A is a perspective view of an embodiment of one or more active material structures;
FIG. 5B is an expanded perspective view of the one or more active material structures shown in FIG. 5A;
FIG. 5C is a cross-sectional view taken along line B-B of the one or more active material structures shown in FIG. 5A;
FIG. 5D is a cross-sectional view of an embodiment of one or more active material structures;
FIG. 5E is a scanning electron microscope photograph of an embodiment of one or more active material structures;
FIG. 5F is an enlarged view of a portion of FIG. 5E;
FIG. 6A is a perspective view of an embodiment of one or more active material structures;
FIG. 6B is a separation perspective view of the one or more active material structures shown in FIG. 6A;
FIG. 6C is a cross-sectional view taken along line C-C of the one or more active material structures shown in FIG. 6A;
FIG. 6D is a cross-sectional view of an embodiment of one or more active material structures;
FIG. 7 is a perspective view of an embodiment of one or more active material structures;
FIG. 8A is a cross-sectional view of the one or more active material structures shown in FIG. 7;
FIG. 8B is a cross-sectional view of an embodiment of one or more active material structures;
FIG. 9 is a flowchart of an embodiment of a method of fabricating an active material structure;
FIG. 10A, FIG. 10B, FIG. 10C, and FIG. 10D are perspective views for explaining a method of fabricating the active material structure of FIG. 9; and
FIG. 11 is a flowchart of an embodiment of a method of fabricating an active material structure.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Hereinafter, embodiments of the present disclosure will be described in detail with reference to the accompanying drawings. In the following drawings, the size or thickness of each component in the drawings may be exaggerated for clarity and convenience of description. Meanwhile, the embodiments described below are merely exemplary, and various modifications may be made from these embodiments.

Hereinafter, what is described as "above" or "on" may include what is directly on with contact, as well as what is on without contact. In contrast, when an element is referred to as being "directly on" another element, there are no intervening elements present.

Singular expressions include plural expressions unless the context clearly indicates otherwise. As used herein, "a", "an," "the," and "at least one" do not denote a limitation of quantity, and are intended to include both the singular and plural, unless the context clearly indicates otherwise. For example, "an element" has the same meaning as "at least one element," unless the context clearly indicates otherwise. "At least one" is not to be construed as limiting "a" or "an." "Or" means "and/or." When a part "includes" a certain component, it means that other components may be further included rather than excluding other components unless specifically stated to the contrary.

It will be understood that, although the terms "first," "second," "third," etc. may be used herein to describe various elements, components, regions, layers, and/or sections, these elements, components, regions, layers and/or sections should not be limited by these terms. These terms are only used to distinguish one element, component, region, layer, or section from another element, component, region, layer, or section. Thus, "a first element," "component," "region," "layer," or "section" discussed below could be termed a second element, component, region, layer, or section without departing from the teachings herein.

Furthermore, relative terms, such as "lower" and "upper," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10% or 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

As used herein, a C-rate means a current which will discharge a battery in one hour, e.g., a C-rate for a battery having a discharge capacity of 1.6 ampere-hours would be 1.6 amperes.

Disclosed is a high-capacity secondary battery using a three-dimensional electrode structure.

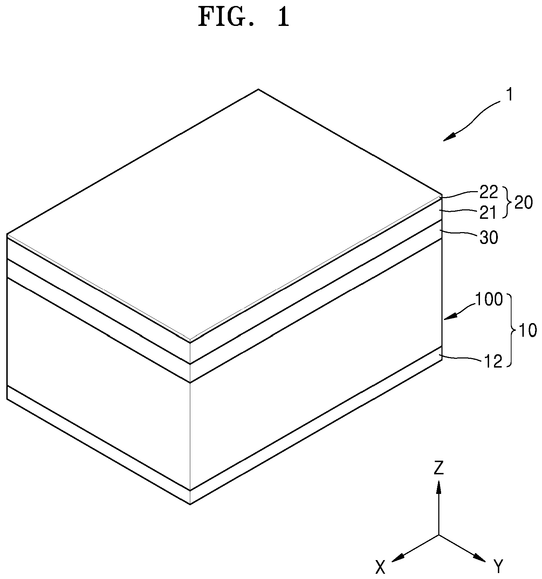

FIG. 1 is a perspective view of a secondary battery according to an embodiment.

Referring to FIG. 1, the secondary battery 1 according to an embodiment may include a first electrode structure 10, a second electrode structure 20, and a separation membrane 30 to be arranged between the first electrode structure 10 and the second electrode structure 20. As an example, the first electrode structure 10 may be a positive electrode structure, and the second electrode structure 20 may be a negative electrode structure.

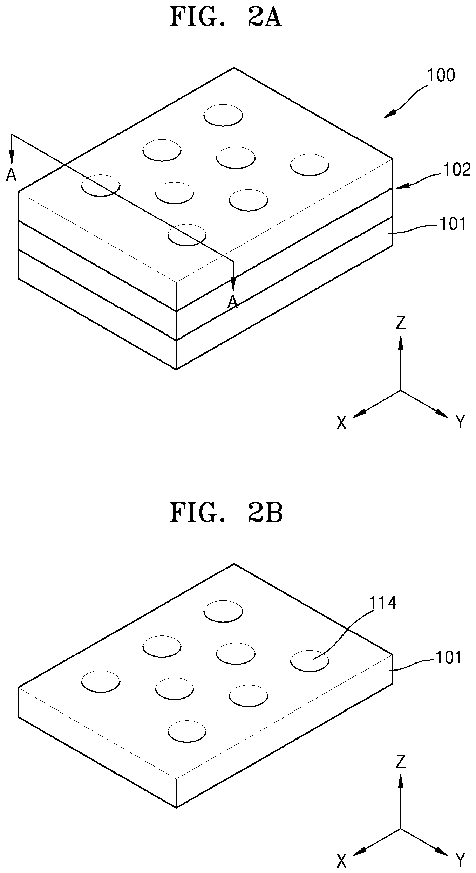

The first electrode structure 10 according to an embodiment may include one or more active material structures 100 and a positive electrode current collecting layer 12. The matters related to the one or more active material structures 100 will be described in more detail with reference to FIGS. 2A to 8B.

The positive electrode current collecting layer 12 may have a flat shape, and in this case, be referred to as a current collecting plate. The positive electrode current collecting layer 12 according to an embodiment may be arranged to face one side of the one or more active material structures 100. The positive electrode current collecting layer 12 may include one or more conductive materials including, for example, Cu, Au, Pt, Ag, Zn, Al, Mg, Ti, Fe, Co, Ni, Ge, In, or Pb. The positive electrode current collecting layer 12 may be a metal layer, or may be a layer including another conductive material other than metal.

The second electrode structure 20 according to an embodiment may include a negative electrode layer 21 and a negative electrode current collecting layer 22. The negative electrode layer 21 may be provided with a flat plate shape and include a negative electrode active material that may reversibly intercalate/deintercalate lithium ions. The negative electrode active material according to an embodiment may include a composition including one or more of a lithium metal, an alloy of lithium metal, or a material capable of doping and dedoping or intercalating and deintercalating lithium, such as a transition metal oxide. The composition for forming the negative electrode layer 21 according to an embodiment may further include one or more of a binder, a conductive material, or a thickener in addition to the negative electrode active material.

The negative electrode current collecting layer 22 may be arranged to face one side of the negative electrode layer 21 to be electrically connected to the negative electrode layer 21. At this time, the negative electrode current collecting layer 22 may be arranged to face the positive electrode current collecting layer 12. According to an embodiment, the negative electrode current collecting layer 22 may include one or more of, for example, a copper foil, a nickel foil, a stainless steel foil, a titanium foil, a nickel foam, a copper foam, or a conductive metal-coated polymer member, but the present disclosure is not limited thereto.

The separation membrane 30 may be used to separate the first electrode structure 10 and the second electrode structure 20 and provide a moving passage of the lithium ions. The separation membrane separation membrane 30 may be any suitable material. That is, those having low resistance to ion migration of an electrolyte and excellent ability in moisturizing of electrolyte material may be used as the separation membrane 30. The separation membrane 30 may be one or more of, for example, glass fiber, polyester, polyethylene ("PE"), or polypropylene ("PP"), polytetrafluoroethylene ("PTFE"). The separation membrane 30 may be in the form of a nonwoven fabric or a woven fabric. In particular, the lithium ion battery may mainly use, for example, a polyolefin-based polymer separation membrane such as a microporous polyethylene, polypropylene, or the like, and also use a coated separation membrane containing ceramic component or polymeric material to obtain heat resistance or mechanical strength. Also, the separation membrane 30 may optionally be used in a single-layer structure or a multi-layer structure.

As described herein, when the secondary battery 1 having one or more three-dimensional active material structures 100 on the positive electrode current collecting layer 12 is provided, the capacity and energy density of the secondary battery 1 may greatly increase compared to a secondary battery having a two-dimensional (i.e., a planar type) active material structure. The one or more three-dimensional active material structures 100 may provide an increased active material volume fraction and an increased reaction area compared to the planar type active material plate, and thus, the one or more three-dimensional active material structures 100 may be advantageous to improve the energy density and the rate capability of the battery (i.e., the secondary battery).

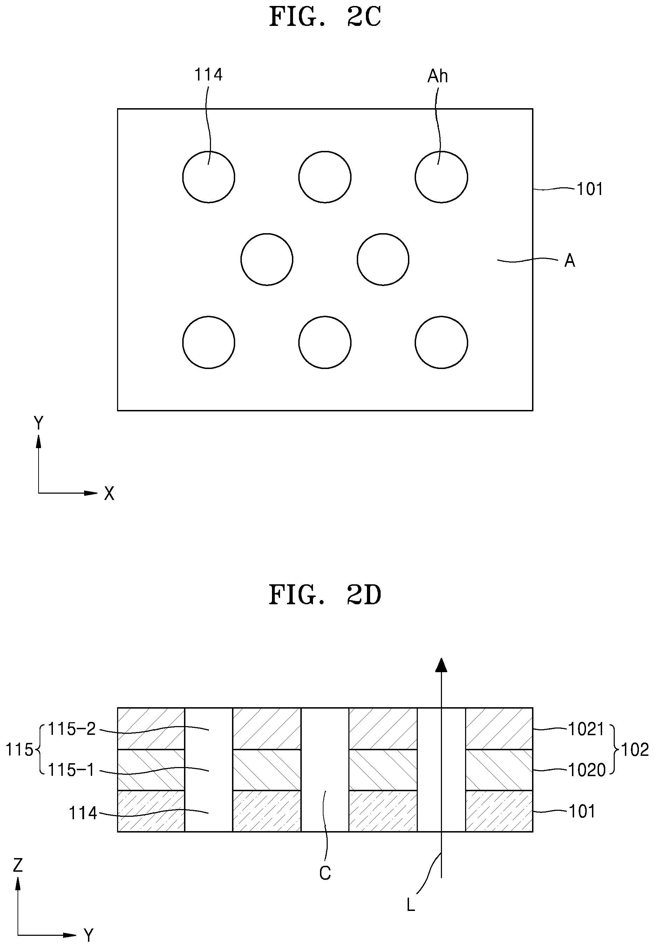

However, when a positive electrode active material contained in the one or more active material structures 100 is sintered to a high density to increase the capacity of the secondary battery 1, the ion conductivity of the one or more active material structures 100 may be lowered so that the energy density and the rate capability of the secondary battery 1 may be degraded. An electrolyte material (not shown) having a high ion conductivity may be disposed into a channel C (see FIG. 2D) to prevent the degradation of the energy density and the rate capability of the secondary battery 1.

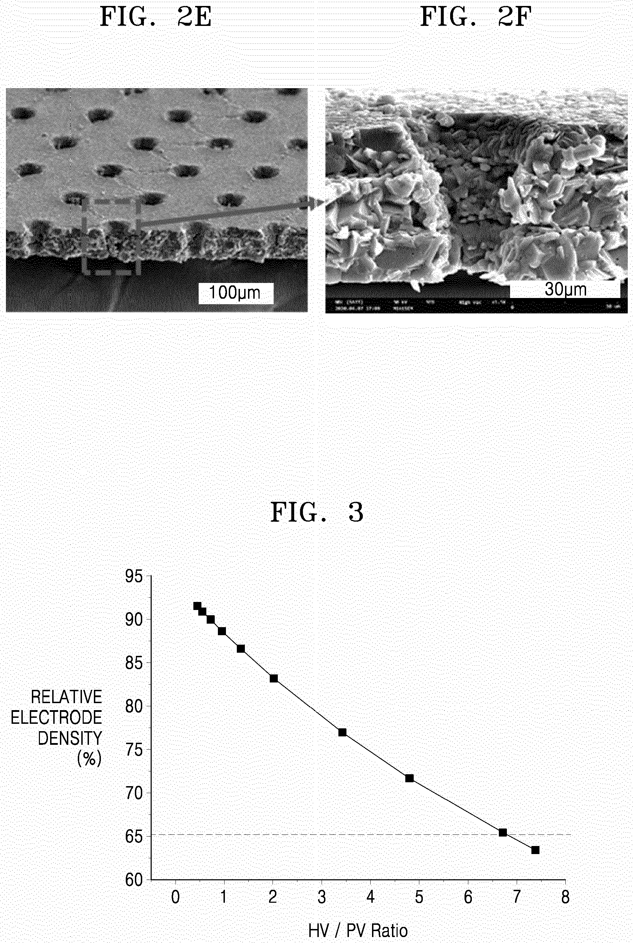

FIG. 2A is a perspective view of an active material structure according to an embodiment. FIG. 2B is a perspective view of a first active material plate according to an embodiment. FIG. 2C is a plan view of the first active material plate shown in FIG. 2B. FIG. 2D is a cross-sectional view taken along line A-A of the active material structure shown in FIG. 2A. FIG. 2E is a SEM photograph of an active material structure according to an embodiment. FIG. 2F is an enlarged view of a portion of FIG. 2E.

Referring to FIGS. 2A to 2D, the one or more active material structures 100 according to an embodiment may include a first active material plate 101 having a plurality of first penetration hole 114 and one or more second active material plates 102 having a plurality of second penetration hole 115. Here, for the convenience of explanation, the one or more active material structures 100 is described as having one active material structure, but may include two or more active material structures. According to an embodiment, the active material structure 100 shown in FIG. 2A may be arranged in two or more and may be stacked in a first direction (a Z direction), for example, a thickness direction of the first active material structure. Further, in this case, the two or more active material structures 100 according to an embodiment may each include the first active material plate 101 having the plurality of first penetration hole 114 and the one or more second active material plates 102 having the plurality of second penetration hole 115.

As an example, the one or more second active material plates 102 may include a lower active material plate 1020 and an upper active material plate 1021 as shown in FIG. 2D. At this time, the first active material plate 101, the lower active material plate 1020 and the upper active material plate 1020 may be sequentially stacked in the first direction (the Z direction). For the convenience of the description, a pair of active material plates are described herein as an example, but the second active material plate may include one, or three or more active material plates.

The lower active material plate 1020 may include a plurality of second-1 penetration holes 115-1. In addition, the upper active material plate 1021 may include a plurality of second-2 (also referred to herein as "fourth") penetration holes 115-2. At least a portion of the plurality of first penetration holes 114, at least a portion of the plurality of second-1 penetration holes 115-1, and at least a portion of the plurality of second-2 penetration holes 115-2 may be aligned in the first direction (the Z direction) to form the channel C. At this time, the electrolyte material (not shown) may be disposed in at least a portion of the plurality of first penetration holes 114, at least a portion of the plurality of second-1 penetration holes 115-1, and at least a portion of the plurality of second-2 penetration holes 115-2. Extension directions and sizes of at least a portion of the plurality of first penetration holes 114 may substantially be the same as the extension directions and sizes of at least a portion of the plurality of second-1 penetration holes 115-1 and at least a portion of the plurality of second-2 penetration holes 115-2, and thus, the following will be described focusing on the plurality of first penetration holes 114.

At least a portion of the plurality of first penetration holes 114 may be arranged to penetrate the first active material plate 101 in the first direction (the Z direction) as shown in FIGS. 2B and 2C. As an example, at least a portion of the plurality of first penetration holes 114 may be spaced apart from each other at predetermined intervals as viewed from one side of the first active material plate 101. According to an embodiment, a sum of each area of the plurality of the first penetration holes 114 ("Ah") may be about 1% to about 5% of an entire area of the one side of the first active material plate 101 ("A") shown in FIG. 2C.

As an example, the first active material plate 101 and the one or more second active material plates 102 may include the same first active material. In addition, according to an embodiment, at least two or more of the first active material plate 101, the lower active material plate 1020, and the upper active material plate 1021 may include different first and second active materials. The first and second active materials may include, for example, the positive electrode active material. Here, the first and second active materials may be the same material or different materials. The first and second active materials may include, for example, LiCoO₂ ("LCO"), Li [Ni, Co, Mn] O₂ ("NCM" or LiNiₓCo_{y}Mn_{z}O₂, wherein 0≤x<1, 0≤y<1, 0≤z<1, and x+y+z=1), Li [Ni, Co, Al] O₂ ("NCA" or LiNiₓCo_{y}Al_{z}O₂, wherein 0≤x<1, 0≤y<1, 0≤z<1, and x+y+z=1), LiMn₂O₄ ("LMO"), or LiFePO₄ ("LFP"). However, the first and second active materials are not limited thereto.

In addition, when the first active material plate 101 and the one or more second active material plates 102 are formed through a sintering process to be described herein, the first active material plate 101 and the one or more second active material plates 102 may be provided with a porous structure. At this time, pores in the first active material plate 101 and the one or more second active material plates 102 may be filled with the electrolyte material (not shown) to be described herein. In addition, a sintering density of the first active material plate 101 and the one or more second active material plates 102 according to an embodiment, may be the same or different. As an example, when the first active material plate 101 has a first porosity, the lower active material plate 1020 has a second porosity, and the upper active material plate 1021 has a third porosity, the first porosity may be less than the second porosity and the third porosity. The porosity of the active material plate having the plurality of penetration holes may be determined based on a remaining region except for (e.g., not including) regions where the penetration holes are disposed. For example, the first porosity of the first active material plate 101 may be determined in the remaining region of the first active material plate 101 except for (e.g., not including) the regions where the plurality of first penetration holes 114 are disposed.

Further, according to an embodiment, the second porosity of the lower active material plate 1020 may be the same as the third porosity of the upper active material plate 1021, or the second porosity of the lower active material plate 1020 may be less than the third porosity of the upper active material plate 1021. For example, the first porosity may be about 10% or less, the second porosity may be about 20% to about 60%, and the third porosity may be about 20% to about 60%. However, this disclosure is not limited thereto. As described herein, by providing the first active material plate 101, the lower active material plate 1020, and the upper active material plate 1021, the active material structure 100 as shown in FIG. 2D may be formed.

In addition, according to an embodiment, the electrode density, e.g., the electrode mass per unit volume, and the battery capacity may vary depending on the ratio of a sum of volumes of the plurality of first penetration holes 114 disposed in the first active material plate 101 and a sum of volumes of the pores in the one or more second active material plates 102, for example, a sum of volumes of the pores in the lower active material plate 1020 and the upper active material plate 1021. The related matters will be described herein with reference to FIGS. 3 to 4F.

Further, the first active material plate 101 according to one example may have a thickness of about 5 micrometers (µm) to about 100 µm in the first direction (the Z direction), and the lower active material plate 1020 may have the thickness of about 1 µm to about 20 µm, and the active material plate 1021 may have the thickness of about 1 µm to about 20 µm.

The first active material plate 101 and the one or more second active material plates 102 may be fabricated through the sintering process to be described herein, and thus may not include a binder. That is, the first active material plate 101 and the one or more second active material plates 102 may be binder-free that does not include the binder.

Further, the first active material plate 101 and the one or more second active material plates 102 may additionally include a conductive material, e.g., metal, in addition to the positive electrode active material. Here, the conductive material, e.g., metal, may include, for example, one or more of Al, Cu, Ni, Co, Cr, W, Mo, Ag, Au, Pt, or Pb, but is not limited thereto.

Referring to FIG. 2D, at least a portion of the plurality of first penetration holes 114 included in the first active material plate 101 and at least a portion of the plurality of second-1 and second-2 penetration holes 115-1 and 115-2 that are respectively included in the lower active material plate 1020 and the upper active material plate 1021 may be aligned in the first direction (the Z direction). At this time, the electrolyte material (not shown) may be disposed in at least a portion of the plurality of first penetration holes 114, at least a portion of the plurality of second-1 penetration holes 115-1, and at least a portion of the plurality of second-2 penetration holes 115-2. At least a portion of the plurality of channels C may be formed in a path to which at least a portion of the plurality of first penetration holes 114, at least a portion of the plurality of second-1 penetration holes 115-1, and at least a portion of the plurality of second-2 penetration holes 115-2 are connected. A metal ion moving passage L leading to the first active material plate 101, the lower active material plate 1020, and the upper active material plate 1021 may be formed along at least a portion of the plurality of channels C.

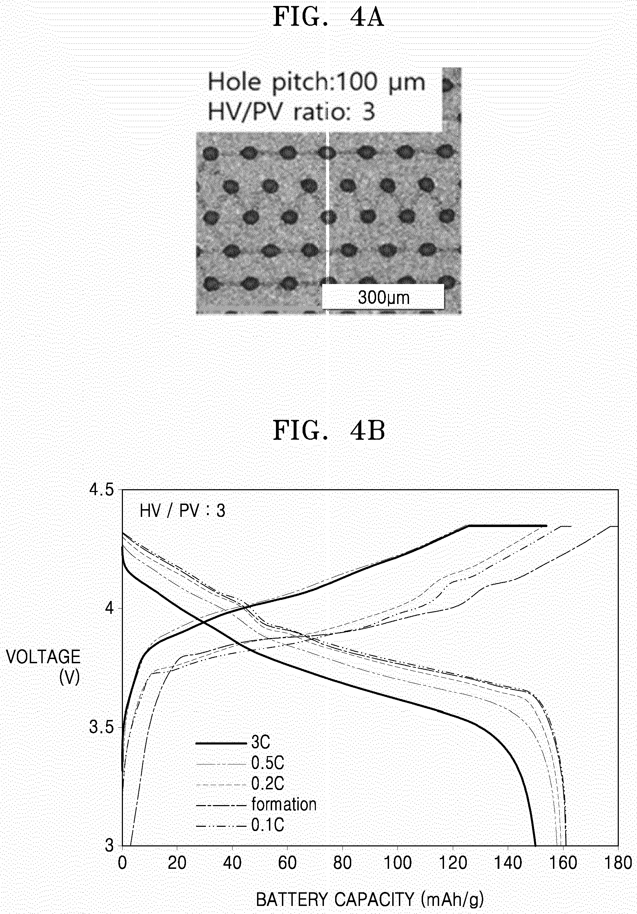

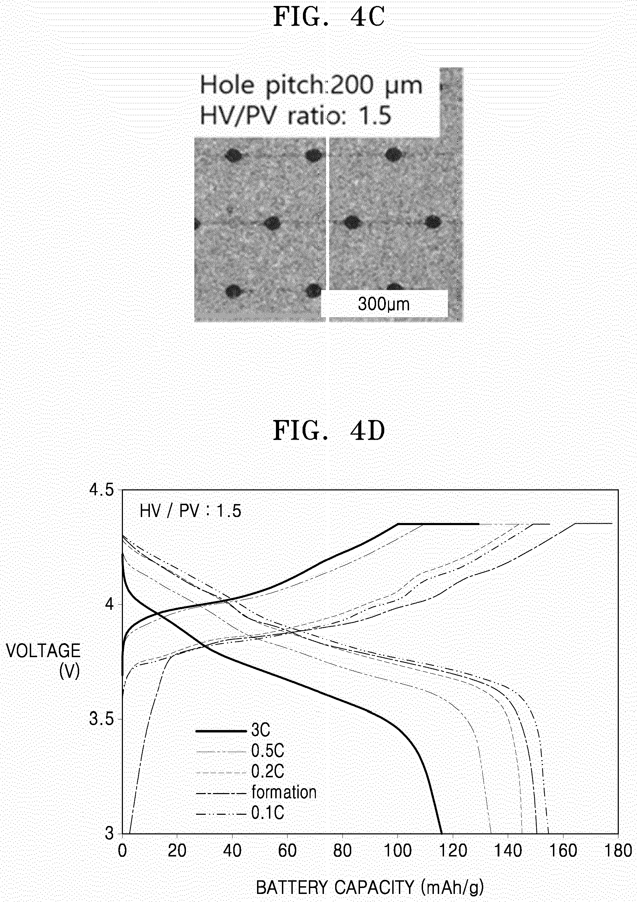

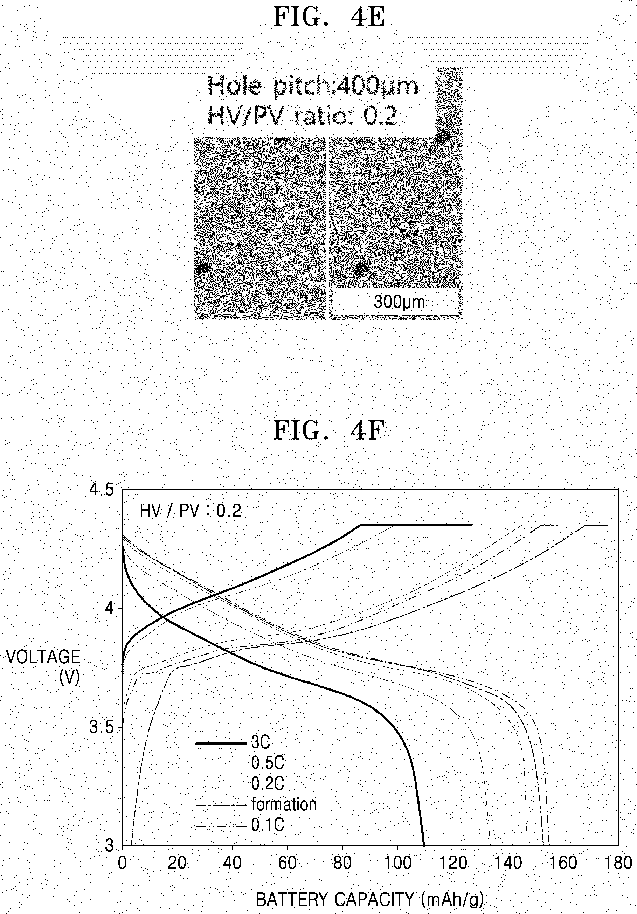

FIG. 3 is a graph illustrating a relative electrode density versus the ratio of a sum of volumes of a plurality of first penetration holes of the first active material plate ("HV") to a sum of volumes of pores of the one or more second active material plates ("PV"). The relative electrode density was determined by dividing the apparent density by the theoretical density and multiplying by 100%. As used herein, the relative values of HV and PV may be expressed as a ratio (e.g., 0.2:1) or by dividing the value of HV by the value of PV (e.g., 0.2). FIG. 4A is a scanning electron microscope photograph of an active material structure according to an embodiment. FIG. 4B is a graph showing the battery capacity of a secondary battery including an active material structure according to an embodiment. FIG. 4C is a scanning electron microscope photograph of an active material structure according to an embodiment. FIG. 4D is a graph showing the battery capacity of a secondary battery including an active material structure according to an embodiment. FIG. 4E is a scanning electron microscope photograph of an active material structure according to an embodiment. FIG. 4F is a graph showing the battery capacity of a secondary battery including an active material structure according to an embodiment.

An active material structure according to an embodiment may be formed by forming an active material sheet through drying an active material slurry, forming at least a portion of a plurality of first penetration holes and at least a portion of a plurality of second penetration holes using the laser drilling method, and sintering positive electrode active materials contained in the active material sheet through the sintering process.

In the active material structure according to an embodiment, the first active material plate 101 may be provided with the active material sheet with a thickness of about 13 µm, the active material sheet containing about 95 volume percent (vol%) positive electrode active material. The one or more second active material plates 102 may be provided with the active material sheet with a thickness of about 2.5 µm, the active material sheet containing about 55 vol% positive electrode active material.

The first active material plate 101 and the one or more second active material plates 102 may be stacked, and at least a portion of the plurality of first penetration holes and at least a portion of the plurality of second penetration holes may be formed through the laser drilling method. At this time, at least a portion of the plurality of first penetration holes and at least a portion of the plurality of second penetration holes may be about 24 µm, and intervals between the penetration holes may be about 100 µm. Thereafter, the first active material plate 101 and the one or more second active material plates 102 may be sintered at about 1,025 degrees for about 2 hours. Accordingly, the ratio of a sum of volumes of the plurality of first penetration holes of the first active material plate ("HV") to a sum of volumes of pores in the one or more second active material plates ("PV") may be about 3. On the first electrode structure 10 in which the positive electrode active material is sintered, an electrolyte in which a lithium salt and a carbonate-based solvent are mixed may be disposed through a spin coating method or a dip coating method.

In an embodiment, an interval between the penetration holes in an embodiment may be about 200 µm and the ratio of a sum of volumes of the plurality of first penetration holes ("HV") to a sum of volumes of the pores in the one or more second active material plates ("PV") may be about 1.5.

In an embodiment, an interval between the penetration holes in an embodiment may be about 400 µm and the ratio of a sum of volumes of the plurality of first penetration holes ("HV") to a sum of volumes of the pores in the one or more second active material plates ("PV") may be about 0.2.

Referring to FIGS. 1 and 3, the electrode density of the first electrode structure 10 may vary depending on the ratio of a sum of volumes of the plurality of first penetration holes 114 disposed in the first active material plate 101 ("HV") and a sum of volumes of the pores in the one or more second active material plates 102 ("PV"). For example, when a sum of volumes of the plurality of first penetration holes 114 ("HV") increases or decreases, the ratio HV/PV of a sum of volumes of the plurality of first penetration holes 114 to a sum of volumes of the pores in the one or more second active material plates 102 may vary.

As an example, the relative electrode density (%) may be set based on the electrode density when a sum of volumes of the plurality of first penetration holes 114 ("HV") is 0, and may represent the ratio of the electrode density as a sum of volumes of the plurality of first penetration holes 114 ("HV") increases. As shown in FIGS. 4E, 4C and 4A, while maintaining the sum of volumes of the pores in the one or more second active material plates 102 ("PV"), when decreasing hole pitches between at least a portion of the plurality of first penetration holes 114 to about 400 µm (see FIG. 4E), about 200 µm (see FIG. 4C), and about 100 µm (see FIG. 4A), the ratio HV/PV of a sum of volumes of the plurality of first penetration holes 114 to a sum of volumes of the pores in the one or more second active material plate 102 may increase to about 0.2 (see FIG. 4E), about 1.5 (see FIG. 4C), or about 3 (see FIG. 4A). At this time, it may be found that the relative electrode density (%) decreases. As an example, in order to adjust the relative electrode density (%) to about 65% or greater, the ratio HV/PV may be about 7 or less.

In addition, referring to FIGS. 4A to 4F, the battery capacity may vary depending on the ratio HV/PV of a sum of volumes of the plurality of first penetration holes 114 to a sum of volumes of the pores in the one or more second active material plates 102. Cell capacity-voltage characteristics were evaluated while discharging at 0.1 C rate, 0.2 C rate, 0.5 C rate, and 3 C rate.

For example, as shown in FIGS. 4A, 4C and 4E, while maintaining the sum of volumes of the pores in the one or more second active material plates 102 ("PV"), when increasing hole pitches between at least a portion of the plurality of first penetration holes 114 to about 100 µm (see FIG. 4A), about 200 µm (see FIG. 4C), and about 400 µm (see FIG. 4E), the ratio HV/PV of a sum of volumes of the plurality of first penetration holes 114 to a sum of volumes of the pores in the one or more second active material plates 102 may decrease to about 3 (see FIG. 4A), about 1.5 (see FIG. 4C), or about 0.2 (see FIG. 4E). At this time, referring to FIGS. 4B, 4D and 4F, it may be found that the high rate capability in the battery capacity decrease sharply from a section where the ratio HV/PV of a sum of volumes of the plurality of first penetration holes 114 to a sum of volumes of the pores in the one or more second active material plates 102 is about 0.2. Therefore, in order to secure the high rate capability in the battery capacity, the ratio HV/PV of a sum of volumes of the plurality of first penetration holes 114 to a sum of volumes of the pores in the one or more second active material plates 102 may be about 0.2 or more.

As described herein, in order to prevent reduction of the electrode density and the high rate capability of the battery capacity, the ratio HV/PV of a sum of volumes of the plurality of first penetration holes 114 to a sum of volumes of the pores in the one or more second active material plates 102 may be about 0.2 to about 7. However, the present disclosure is not limited thereto, and the ratio HV/PV of a sum of volumes of the plurality of first penetration holes 114 to a sum of volumes of the pores in the one or more second active material plates 102 may vary depending on the high rate capability and the electrode density.

At least a portion of the plurality of first penetration holes 114, at least a portion of the plurality of second-1 penetration holes 115-1, and at least a portion of the plurality of second-2 penetration holes 115-2 may be aligned in the first direction (the Z direction) to form the channel C. At this time, the electrolyte material (not shown) may be disposed in at least a portion of the plurality of first penetration holes 114, at least a portion of the plurality of second-1 penetration holes 115-1, and at least a portion of the plurality of second-2 penetration holes 115-2. However, the electrolyte material (not shown) having a high ionic conductivity may be disposed in the channel C in order to prevent degradation of the electrode density and the high rate capability and at this time, when the channel C) is blocked, the ionic conductivity of the one or more active material structures 100 may be lowered. Therefore, a separate moving passage that may bypass the channel C may be required. Hereinafter, the one or more active material structures in which the separate moving passage may be generated due to no penetration holes in the one or more second active material plates 102 will be described.

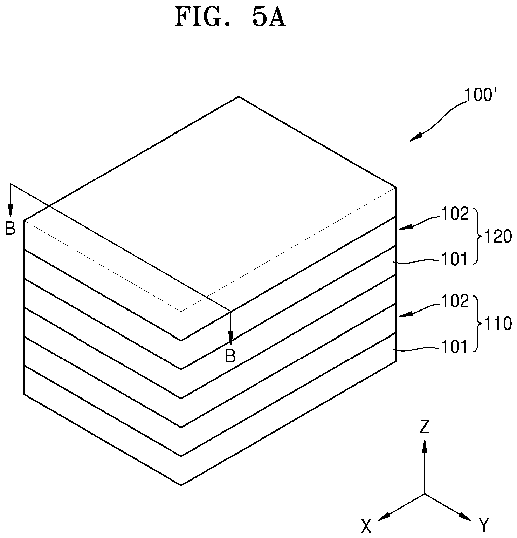

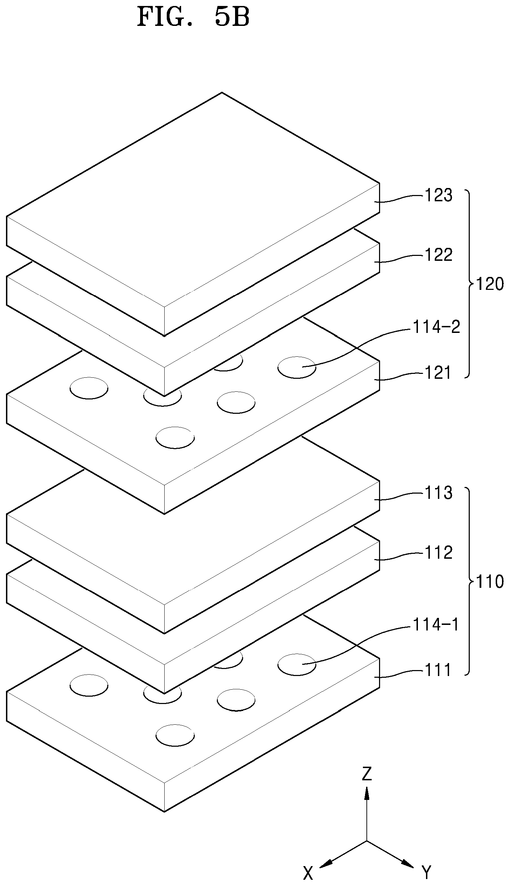

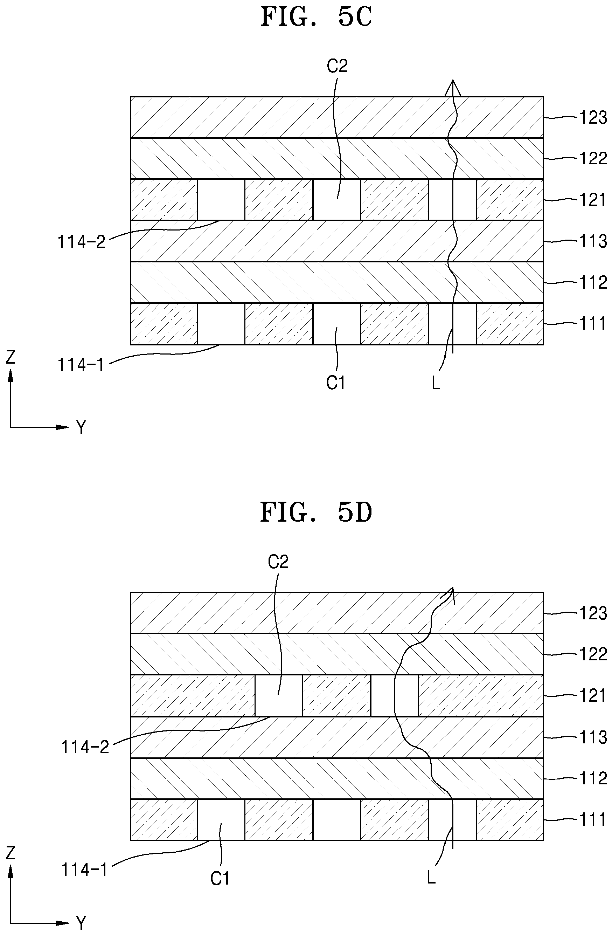

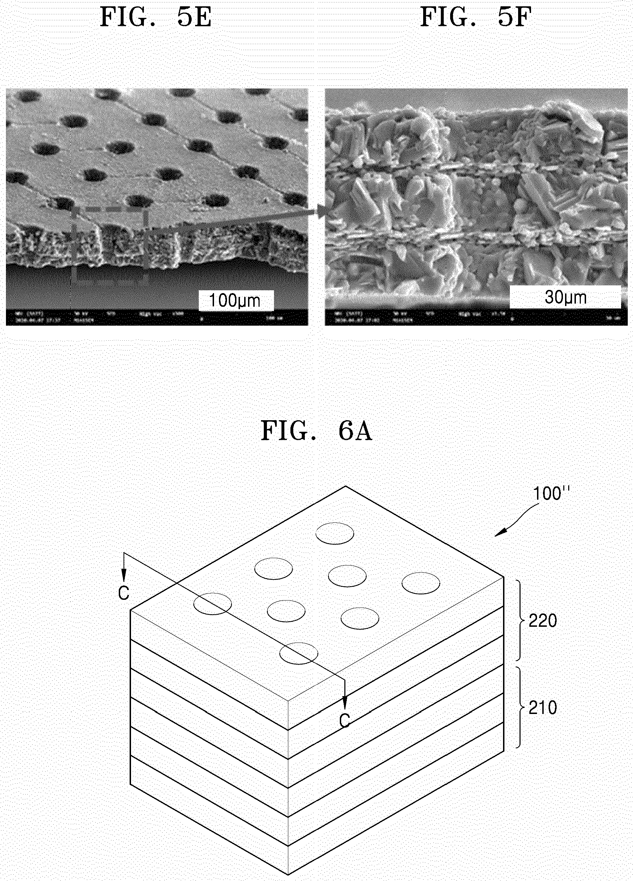

FIG. 5A is a perspective view of one or more active material structures according to an embodiment. FIG. 5B is a separation perspective view of the one or more active material structures shown in FIG. 5A. FIG. 5C is a cross-sectional view taken along line B-B of the one or more active material structures shown in FIG. 5A. FIG. 5D is a cross-sectional view of one or more active material structures according to an embodiment. FIG. 5E is a scanning electron microscope photograph of one or more active material structures according to an embodiment. FIG. 5F is an enlarged view of a portion of FIG. 5E.

Referring to FIGS. 5A to 5C, one or more active material structures 100' may include a pair of a first active material structure 110 and a second active material structure 120. Here, for the convenience of explanation, the one or more active material structures 100' is described as having two active material structures, but may include three or more active material structures.

The first active material structure 110 and the second active material structure 120 according to an embodiment may be stacked in the first direction (the Z direction), for example, the thickness direction of the active material structure. In addition, in this case, the first active material structure 110 and the second active material structure 120 may respectively include the first active material plate 101 and the one or more second active material plates 102 that respectively have the plurality of first penetration holes.

In an embodiment, the plurality of second penetration holes 115 may not be disposed in the one or more second active material plates 102.

As an example, the first active material structure 110 may include a first-1 (also referred to herein as "first") active material plate 111 having a plurality of first-1 penetration holes 114-1 and one or more second-1 (also referred to herein as "second") active material plates 112 and 113. At least a portion of the plurality of first-1 penetration holes 114-1 may form at least a portion of a plurality of channels C1 through which ion conduction may take place. At this time, an electrolyte material (not shown) may be disposed in at least a portion of the plurality of first-1 penetration holes 114.

The one or more second-1 active material plates 112 and 113 may include a lower active material plate 112 and an upper active material plate 113. For the convenience of the description, a pair of active material plates are described herein as an example, but the second-1 active material plate may include one, or three or more active material plates.

The lower active material plate 112 and the upper active material plate 113 according to an embodiment may be provided in a plate shape extending along one plane. At this time, the first-1 active material plate 101, the lower active material plate 112, and the upper active material plate 113 may be sequentially stacked in the first direction (the Z direction).

As an example, the second active material structure 120 may include a first-2 (also referred to herein as "third") active material plate 121 having a plurality of first-2 penetration holes 114-2 and one or more second-2 active material plates 122 and 123.

The first-1 penetration hole 114-1 included in the first-1 active material plate 111 and the first-2 penetration hole 114-2 included in the first-2 active material plate 121 may be arranged in the first direction (the Z direction). An electrolyte material (not shown) may be disposed in the first-1 penetration hole 114-1 and the first-2 penetration hole 114-2, so that the first-1 penetration hole 114-1 may form a first channel C1 and the first-2 penetration hole 114-2 may form a second channel C2. Thus, a metal ion moving passage L leading to the first channel C1, the one or more second-1 active material plates 112 and 113, the second channel C2, and the one or more second-2 active material plates 122 and 123 may be formed.

As described herein, by dividing the channel in the first direction (the Z direction) into two sections, a channel clogging phenomenon from occurring in an intermediate region of one relatively long channel may be avoided. In addition, by arranging the one or more second-1 active material plates 112 and 113 between the channels, a bypass channel may be formed to variously form the metal ion moving passage L.

Referring to FIG. 5D, the first-1 penetration hole 114-1 included in the first-1 active material plate 111 and the first-2 penetration hole 114-2 included in the first-12 active material plate 121 may be arranged to be alternated (e.g., not aligned) in the first direction (the Z direction). The electrolyte material (not shown) may be disposed in the first-1 penetration hole 114-1 and the first-2 penetration hole 114-2, so that the first-1 penetration hole 114-1 may form the first channel C1 and the first-2 penetration hole 114-2 may form the second channel C2. Thus, a metal ion moving passage L leading to the first channel C1, the one or more second-1 active material plates 112 and 113, the second channel C2, and the one or more second-2 active material plates 122 and 123 may be formed. As described herein, by arranging the first-1 penetration hole 114-1 and the first-2 penetration hole 114-2 to be alternated (e.g., not aligned) in the first direction (the Z direction), the metal ion moving passage L may be formed in more various ways.

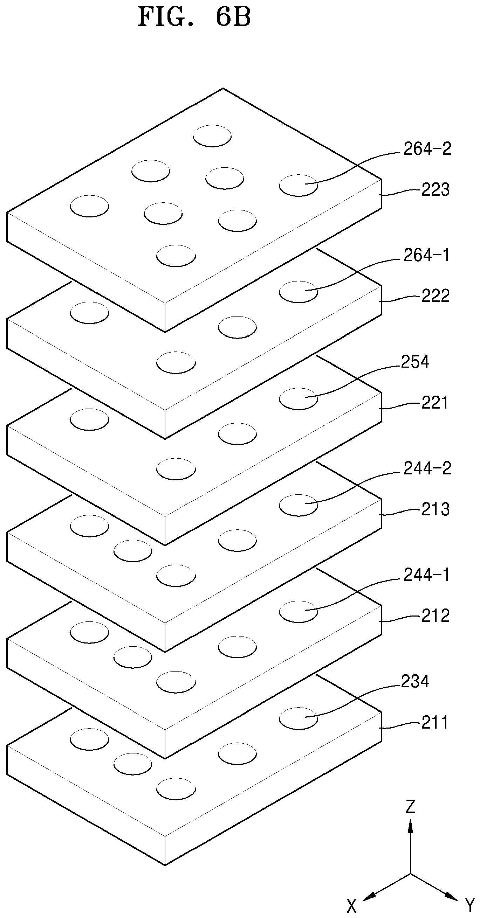

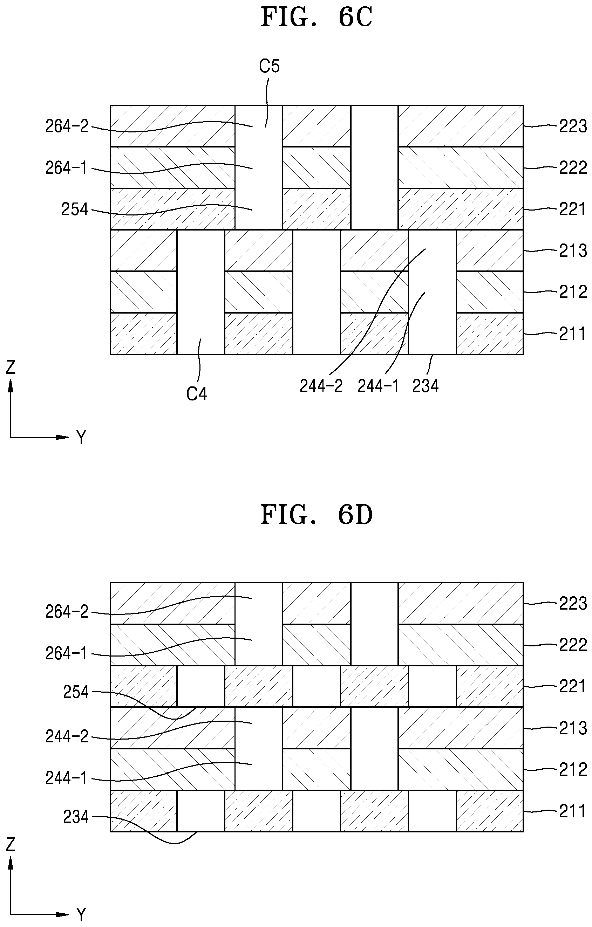

FIG. 6A is a perspective view of one or more active material structures according to an embodiment. FIG. 6B is a separation perspective view of the one or more active material structures shown in FIG. 6A. FIG. 6C is a cross-sectional view taken along line C-C of the one or more active material structures shown in FIG. 6A. FIG. 6D is a cross-sectional view of one or more active material structures according to an embodiment.

Referring to FIGS. 6A to 6C, one or more active material structures 100" according to an embodiment may include a pair of a first active material structure 210 and a second active material structure 220. In an embodiment, a second-1 penetration hole and a second-2 penetration hole may be formed in the pair of the first active material structure 210 and the second active material structure 220.

As an example, the first active material structure 210 may include a first -1 active material plate 211 having a plurality of first-1 penetration holes 234 and one or more second-1 active material plates 212 and 213 having a plurality of second-1 penetration holes 244-1 and 244-2.

At least a portion of the plurality of first-1 penetration holes 234 may be arranged to penetrate the first-1 active material plate 211 in the first direction (the Z direction). As an example, at least a portion of the plurality of first-1 penetration holes 234 may be spaced apart from each other at predetermined intervals as viewed from one side of the first-1 active material plate 211.

At least a portion of the plurality of second-1 penetration holes 244-1 and 244-2 may be arranged to penetrate the one or more second-1 active material plates 212 and 213 in the first direction (the Z direction). As an example, at least a portion of the plurality of second-1 penetration holes 244-1 and 244-2 may be spaced apart from each other at predetermined intervals as viewed from one side of the one or more second-1 active material plates 212 and 213.

As an example, at least a portion of the plurality of first-1 penetration holes 234 and at least a portion of the plurality of second-1 penetration holes 244-1 and 244-2 may be arranged to form one channel region C4 in first direction (the Z direction).

However, the present disclosure is not limited thereto, and as shown in FIG. 6D, at least a portion of the plurality of first-1 penetration holes 234 and at least a portion of the plurality of second-1 penetration holes 244-1 and 244-2 may be arranged so as not to be aligned in the direction (the Z direction).

In addition, as an example, the second active material structure 220 may include a first-1 active material plate 221 having a plurality of first-2 penetration holes 254 and one or more second-2 active material plates 222 and 223 having a plurality of second-2 penetration holes 264-1 and 264 -2.

At least a portion of the plurality of first-2 penetration holes 254 may be arranged to penetrate the first-2 active material plate 221 in the first direction (the Z direction). As an example, at least a portion of the plurality of first-2 penetration holes 254 may be spaced apart from each other at predetermined intervals as viewed from one side of the first-2 active material plate 221.

At least a portion of the plurality of second-2 penetration holes 264-1 and 264-2 may be arranged to penetrate the one or more second-2 active material plates 222 and 223 in the first direction (the Z direction). As an example, at least a portion of the plurality of second-2 penetration holes 264-1 and 264-2 may be spaced apart from each other at predetermined intervals as viewed from one side of the one or more second-2 active material plates 222 and 223.

As an example, at least a portion of the plurality of first-2 penetration holes 254 and at least a portion of the plurality of second-2 penetration holes 264-1 and 264-2 may be arranged to form at least a portion of a plurality of channels C5 in first direction (the Z direction).

However, the present disclosure is not limited thereto, and as shown in FIG. 6D, at least a portion of the plurality of first-2 penetration holes 254 and at least a portion of the plurality of second-2 penetration holes 264-1 and 264-2 may be arranged so as not to be aligned in the direction (the Z direction).

According to an embodiment, at least a portion of the plurality of first-1 penetration holes 234 and at least a portion of the plurality of first-2 penetration holes 254 may be arranged to be alternated (e.g., not aligned) in the first direction (the Z direction). Accordingly, at least a portion of a plurality of channels C4 and at least a portion of the plurality of channels C5 may be arranged to be alternated (e.g., not aligned), wherein at least a portion of the plurality of channels C4 may include at least a portion of the plurality of first-1 penetration holes 234 and at least a portion of the plurality of second-1 penetration holes 244-1 and 244-2 aligned in the first direction (the Z direction) for at least a portion of the plurality of first-1 penetration holes 234, and at least a portion of the plurality of channels C5 may include at least a portion of the plurality of first-2 penetration holes 254 and at least a portion of the plurality of second-2 penetration holes 264-1 and 264-2 aligned in the first direction (the Z direction) for at least a portion of the plurality of first-2 penetration holes 254. Accordingly, according to the present disclosure, the channel clogging phenomenon that may be occurred in a single channel may be avoided, and also the metal ion moving passage may be variously modified.

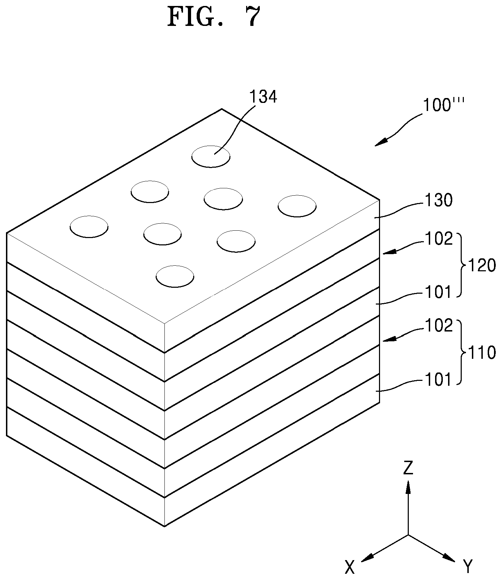

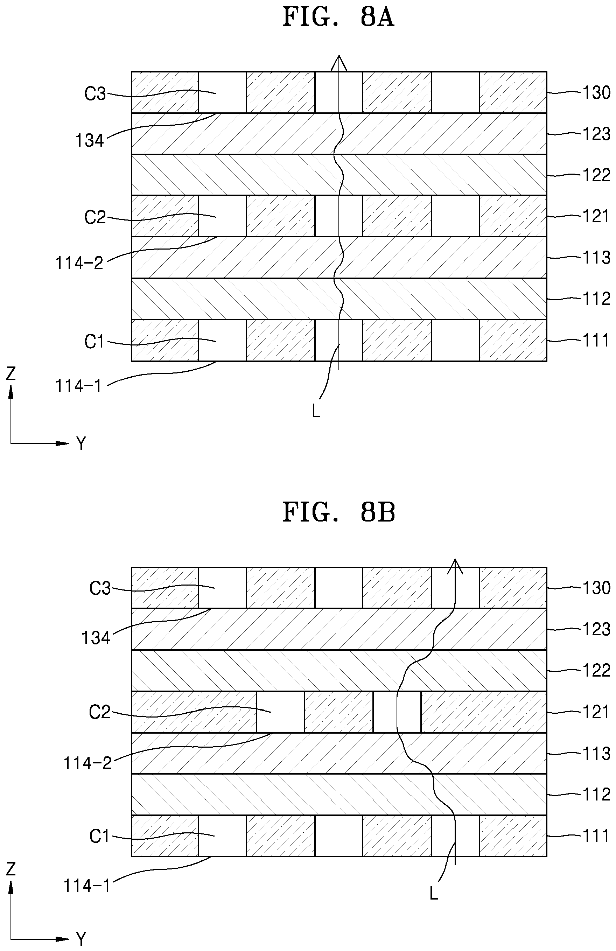

FIG. 7 is a perspective view of one or more active material structures according to an embodiment. FIG. 8A is a cross-sectional view of the one or more active material structures according to an embodiment shown in FIG. 7. FIG. 8B is a cross-sectional view of one or more active material structures according to an embodiment.

One or more active material structures 100‴ according to an embodiment may include a pair of first active material structure 110 and second active material structure 120, and an additional active material plate 130.

The additional active material plate 130 may be provided as a plate-shaped active material plate including a plurality of additional penetration holes 134 extending in a thickness direction, i.e., the first direction (the Z direction), and at least a portion of the plurality of additional penetration holes 134 may form a third channel region C3 through which ion conduction may take place. At this time, the electrolyte material (not shown) may be disposed in at least a portion of the plurality of additional penetration holes 134.

At least a portion of the plurality of additional penetration holes 134 may be arranged to penetrate the additional active material plate 130 in the first direction (the Z direction) as shown in FIGS. 8A and 8B. As an example, at least a portion of the plurality of additional penetration holes 134 may be spaced apart from each other at predetermined intervals as viewed from one side of the additional active material plate 130. According to an embodiment, a sum of each area of the plurality of additional penetration holes 134 may be about 1% to about 5% of the area of one side of the additional active material plate 130.

Further, the additional active material plate 130 may include the positive electrode active material. The additional active material plate 130 may include, for example, LiCoO₂ ("LCO"), Li [Ni, Co, Mn] O₂ ("NCM"), Li [Ni, Co, Al] O₂ ("NCA"), LiMn₂O₄ ("LMO"), or LiFePO₄ ("LFP"), and the like. However, the additional active material plate is not limited thereto.

Further, the additional active material plate 130 according to an embodiment may be arranged on one or more of an uppermost surface or a lowermost surface of the pair of first active material structure 110 and of the second active material structure 120. Accordingly, one or more of the positive electrode current collecting layer 12 or the separation membrane 30 that are arranged to face the plurality of active material structures 100', may be arranged to face the additional active material plate 130. At this time, a metal ion transfer passage L for one or more of the positive electrode current collector layer 12 or the separation membrane 30 through the third channel C3 may be formed.

According to an embodiment, depending on the arrangement of the first channel C1 to the third channel C3 that are formed by at least a portion of the plurality of first-1 penetration holes 114-1, at least a portion of the plurality of first-2 penetration holes 114-2, and at least a portion of the plurality of additional penetration holes 134, various metal ion moving passages L may be set. As an example, as shown in FIG. 8A, when the first channel C1 to the third channel C3 is aligned in the first direction (the Z direction), the metal ion moving passage L may be formed approximately in a straight shape along the first channel C1 to the third channel C3. As an example, as shown in FIG. 8B, when the first channel C1 to the third channel C3 is arranged to be alternated (e.g., not aligned) in the first direction (the Z direction), the metal ion moving passage L may be formed in a non-uniform curve shape along the first channel C1 to the third channel C3. As described herein, depending on the arrangement of at least a portion of the plurality of first-1 penetration holes 114-1, at least a portion of the plurality of first-2 penetration holes 114-2, and at least a portion of the plurality of additional penetration holes 134, various metal ion moving passages L may be set and modified in various ways.

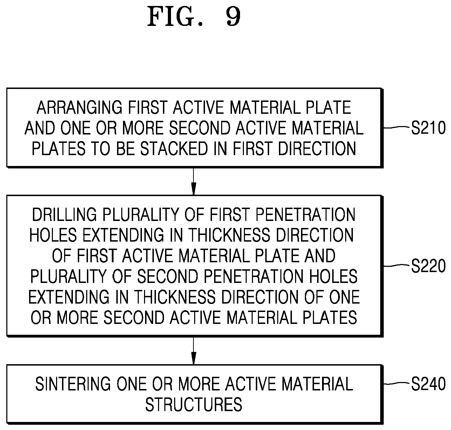

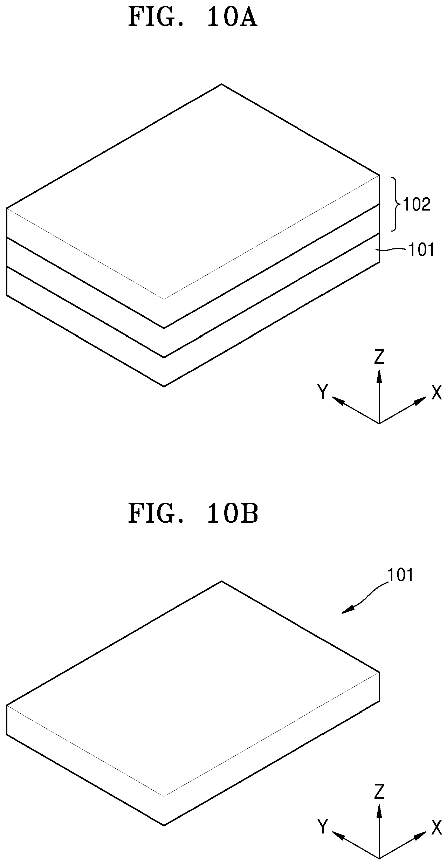

FIG. 9 is a flowchart of a method of fabricating an active material structure according to an embodiment. FIGS. 10A to 10D are perspective views for explaining a method of fabricating the active material structure of FIG. 9.

Referring to FIGS. 9 to 10A, the first active material plate 101 and one or more second active material plates 102 may be stacked in the first direction (the Z direction) (S210). The first active material plate 101 may have a uniform sintering density. The first active material plate 101 may be formed by a tape casting method. Hereinafter, a method of fabricating the first active material plate 101 using the tape casting method will be described in detail with reference to FIG. 8B.

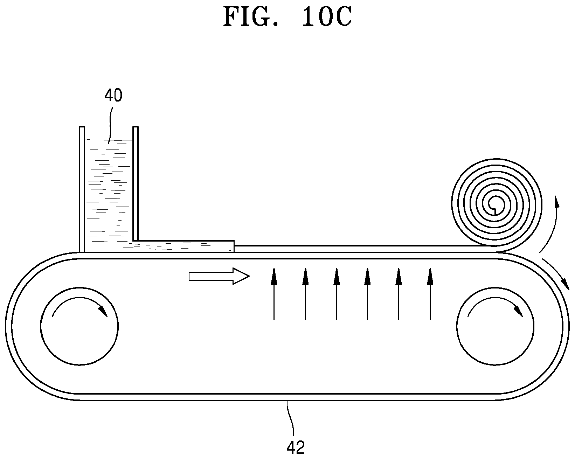

Referring to FIGS. 10B and 10C, an active material slurry 40 may be prepared. The active material slurry 40 may be formed by mixing an active material powder, a dispersing agent, a binder, a plasticizer, a solvent, and the like. The active material powder may include a positive electrode active material. The positive electrode active material may include, for example, LiCoO₂ ("LCO"), Li [Ni, Co, Mn] O₂ ("NCM"), Li [Ni, Co, Al] O₂ ("NCA"), LiMn₂O₄ ("LMO"), or LiFePO₄ ("LFP"), and the like.

The active material slurry 40 may be applied on a conveying belt 42. For example, the transfer belt 42 may move in one direction, and the active material slurry 40 may be provided on the conveying belt 42 being moved. The active material slurry 40 may be applied on the conveying belt 42 with a uniform thickness. For example, a doctor blade (not shown) may uniformly adjust the thickness of the active material slurry 40 applied on the conveying belt 42.

The active material slurry 40 applied on the conveying belt 42 may be dried to form a large-area first active material plate. For example, the active material slurry 40 may be dried through a heating process. The active material powders in the large-area first active material plate may be bonded by the binder. The large-area first active material plate may be cut to form the first active material plate 101 shown in FIG. 10A.

A method of fabricating one or more second active material plates 102 may also be performed by the tape casting method shown in FIG. 10C, which is substantially the same as the method of fabricating the first active material plate 101. For example, when the one or more second active material plates 102 include the lower active material plate 1020 and the upper active material plate 1021 as shown in FIG. 2D, different active material slurries corresponding to composition ratios of each active material plate may be prepared. As an example, the active material slurry 40 may be formed by mixing the active material powder, the dispersing agent, the binder, the plasticizer, the solvent, and the like. The active material powder may include the positive electrode active material. The positive electrode active material may include, for example, LiCoO₂ ("LCO"), Li [Ni, Co, Mn] O₂ ("NCM"), Li [Ni, Co, Al] O₂ ("NCA"), LiMn₂O₄ ("LMO"), or LiFePO₄ ("LFP"), and the like. The active material slurry may be applied on the conveying belt 42 to form the large-area active material plate, and then by cutting the large-area active material plate, the lower active material plate 1020 and the upper active material plate 1021 may be provided.

The one or more second active material plates 102, for example, the lower active material plate 1020 and the upper active material plate 1021 may be sequentially stacked on one side of the first active material plate 101. At this time, the direction in which the lower active material plate 1020 and the upper active material plate 1021 are stacked may be the thickness direction, that is, the first direction (the Z direction). In order to form the plurality of active material structures, the first active material plate 101 and the one or more second active material plates 102 may be repeatedly stacked in the first direction (the Z direction).

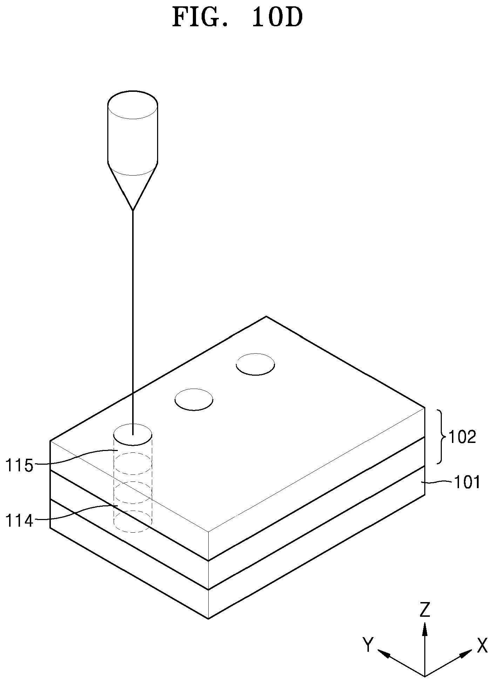

Referring to FIGS. 9 and 10D, at least a portion of the plurality of first penetration holes 114 extending in a thickness direction of the first active material plate 101 and at least a portion of the plurality of second penetration holes 115 extending in a thickness direction of the one or more second active material plates 202 may be drilled (S220). At least a portion of the plurality of first penetration holes 114 and at least a portion of the plurality of second penetration holes 115 may be drilled using the laser drilling method. Tortuosity is an intrinsic property of a porous material that may be defined as the ratio of actual flow path length to the straight distance between the ends of the flow path. As an example, a tortuosity of the plurality of first penetration holes 114 and the plurality of second penetration holes 115 that are formed using the laser drilling method, may be about 1 to about 1.5. Accordingly, at least a portion of the plurality of first penetration holes 114 and at least a portion of the plurality of second penetration holes 115 may form a channel extending substantially in a straight line shape, in a thickness direction, that is, the first direction (the Z direction).

According to another embodiment, steps S210 to S220 may be repeatedly performed to form the plurality of active material structures. As an example, steps S210 to S220 may be repeatedly performed to form the first active material plate 221 and the one or more second active material plates 222 and 223, thereby forming the second active material structure as shown in FIG. 6C. In this case, the second active material structure 220 is stacked on the first active material structure 210.

Then, the one or more active material structures 100 may be sintered (S240). According to an embodiment, the one or more active material structures 100 may be formed through the sintering process, thereby implementing the active material structure of a binder-free structure in which the binder is removed. As an example, the ratio of a sum of volumes of the plurality of first penetration holes 114 to a sum of volumes of the pores in the one or more second active material plates 102 may be about 0.2 to about 7.

According to an embodiment, the positive electrode current collecting layer 12 may be disposed on one side of the one or more active material structures 100. As an example, the positive electrode current collecting layer 12 may have the flat shape, and in this case, be referred to as the current collecting plate. The positive electrode current collecting layer 12 according to an embodiment may be arranged to face one side of the one or more active material structures 100.

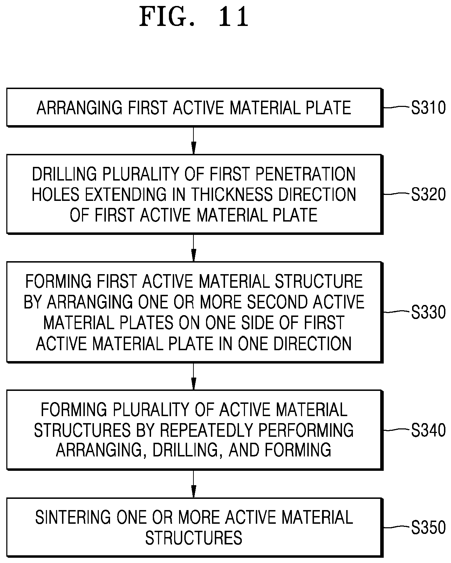

FIG. 11 is a flowchart of a method of fabricating an active material structure according to an embodiment.

Referring to FIG. 11, the first active material plate 101 may be arranged (S310). As an example, the first active material plate 101 may have a uniform sintering density. The first active material plate 101 may be formed by a method substantially the same as the tape casting method shown in FIGS. 10B and 10C.

Then, at least a portion of the plurality of first penetration holes 114 extending in a thickness direction of the first active material plate 101 may be drilled (S320). At least a portion of the plurality of first penetration holes 114 may be drilled using the laser drilling method. Accordingly, at least a portion of the plurality of first penetration holes 114 may extend substantially in a straight line shape in a thickness direction, that is, the first direction (the Z direction). As an example, a tortuosity of the plurality of first penetration holes 114 formed using the laser drilling method may be about 1 to about 1.5. In this case, a sum of each area of the plurality of first penetration holes 114 may be about 1% to about 5% of the area of one side of the first active material plate 101.

Then, the one or more second active material plates 102 may be arranged on one side of the first active material plate 101 in one direction to form the first active material structure 110 (S330). As an example, the one or more second active material plates 102 may be formed by the tape casting method. A process of providing the one or more second active material plate 102 is substantially the same as a fabricating process of the first active material plate 101 shown in FIGS. 10B and 10C, and therefore, the description thereof will be omitted here.

According to another embodiment, as shown in Fig. 6D, at least a portion of the plurality of second penetration holes 244-1 and 244-2 may be drilled using the laser drilling method. Accordingly, at least a portion of the plurality of second penetration holes 244-1 and 244-2 may extend substantially in a straight line shape in a thickness direction, that is, the first direction (the Z direction). At this time, the plurality of first penetration holes 234 and the plurality of second penetration holes 244-1 and 244-2 are arranged to not be aligned in the first direction.

The one or more second active material plates 102 may be sequentially stacked on one side of the first active material plate 101. In this case, the direction in which the one or more second active material plates 102 are stacked may be the thickness direction, that is, the first direction (the Z direction). As described herein, the first active material plate 101 and the one or more second active material plates 102 may be stacked in the first direction (the Z direction), thereby providing one first active material structure 110.

Then, steps S310 to S330 may be repeatedly performed to form the plurality of active material structures (S340). As an example, steps S310 to S330 may be repeatedly performed to form the first active material plate 101 and the one or more second active material plates 102, thereby forming the second active material structure 120 as shown in FIG. 5A. In this case, when marking the first active material structure 110 and the second active material structure 120 separately, the first active material structure 110 and the second active material structure 120 may respectively include the first-1 active material plate 111 and the first-2 active material plate 121, as shown in FIG. 5B. In this case, positions where at least a portion of the plurality of first-1 penetration holes 114-1 provided on the first-1 active material plate 111 and at least a portion of the plurality of first-2 penetration holes 114-2 provided on the first-2 active material plate 121 are formed may be determined according to a predetermined metal ion moving passage.

When at least a portion of the plurality of first-1 penetration holes 114-1 and at least a portion of the plurality of first-2 penetration holes 114-2 are aligned in the first direction (the Z direction) as shown in FIG. 5C, laser may be irradiated at a position where at least a portion of the plurality of first-1 penetration holes 114-1 and at least a portion of the plurality of first-2 penetration holes 114-2 may be aligned in the first direction (the Z direction). In addition, when at least a portion of the plurality of first-1 penetration holes 114-1 and at least a portion of the plurality of first-2 penetration holes 114-2 are arranged to be alternated (e.g., not aligned) in the first direction (the Z direction) as shown in FIG. 5D, the laser may be irradiated at different positions where at least a portion of the plurality of first-1 penetration holes 114-1 and at least a portion of the plurality of first-2 penetration holes 114-2 may be arranged to be alternated (e.g., not aligned). Depending on irradiation position of the laser, the arrangement of at least a portion of the plurality of first penetration holes 114-1 and at least a portion of the plurality of second penetration holes 114-2 may be determined differently, and thus the metal ion moving passage L may be set and modified in various ways as shown in FIGS. 5C and 5D.

Thereafter, as shown in FIG. 5A, the first active material structure 110 and the second active material structure 120 where the first active material plate 101 and the one or more second active material plates 102 are stacked in the first direction (the Z direction), may be stacked in the first direction (the Z direction) to form the plurality of active material structures. Two active material structures may be stacked, or three or more active material structures may be stacked.

Further, the additional active material plate 130 having the plurality of additional penetration holes 134 may be arranged on one or more of the uppermost surface or the lowermost surface of the plurality of active material structures 100. In this case, at least a portion of the plurality of additional penetration holes 134 may be formed to penetrate the additional active material plate 130 in a thickness direction, for example, the first direction (the Z direction) through the laser drilling method.

Then, the one or more active material structures 100 may be sintered (S350). According to an embodiment, the one or more active material structures 100 may be formed through the sintering process, thereby implementing the active material structure of a binder-free structure in with the binder is removed.

According to an embodiment, the positive electrode current collecting layer 12 may be arranged on one side of the plurality of active material structures 100. As an example, the positive electrode current collecting layer 12 may have the flat shape, and in this case, be referred to as the current collecting plate. The positive electrode current collecting layer 12 according to an embodiment may be arranged to face one side of the one or more active material structures 100.

According to an aspect, in the secondary battery having the three-dimensional positive electrode layer, the secondary battery in which lithium ions and electrons may uniformly move may be implemented.

In addition, the secondary battery in which the capacity increases and the rate capability is improved may be provided.

In addition, the secondary battery in which deterioration of the secondary battery is prevented and thus the lifetime thereof is improved may be provided.

However, the effects of the present disclosure are not limited thereto.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

1. An electrode structure (10) comprising:
a first active material structure (100) comprising:
a first active material plate (101) having a plurality of first penetration holes (114) extending in a thickness direction of the first active material plate; and
a second active material plate (102) stacked on a side of the first active material plate in a first direction,
wherein the second active material plate has a plurality of second penetration holes (115-1) extending in a thickness direction of the second active material plate, and
wherein at least a portion of the plurality of first penetration holes and at least a portion of the plurality of second penetration holes are aligned in the first direction, and
**characterized in that** a ratio of a sum of volumes of the plurality of first penetration holes to a sum of volumes of pores in the second active material plate is 0.2:1 to 7:1.

2. The electrode structure of claim 1, further comprising a second active material structure stacked on the first active material structure in the first direction,
wherein the second active material structure comprises:
a third active material plate having a plurality of third penetration holes extending in a thickness direction of the third active material plate, and
a fourth active material plate on a side of the third active material plate,
and wherein at least a portion of the plurality of first penetration holes of the first active material plate and at least a portion of the plurality of third penetration holes of the third active material plate are aligned in the first direction.

3. The electrode structure of claim 2, wherein the second active material plate has a plurality of second penetration holes extending in a thickness direction of the second active material plate, the fourth active material plate has a plurality of fourth penetration holes extending in a thickness direction of the fourth active material plate, at least a portion of the plurality of first penetration holes of the first active material plate and at least a portion of the plurality of second penetration holes of the second active material plate are not aligned in the first direction, and at least a portion of the plurality of third penetration holes of the third active material plate and at least a portion of the plurality of fourth penetration holes of the fourth active material plate are not aligned in the first direction.

4. The electrode structure of claim 1, further comprising a second active material structure stacked on the first active material structure in the first direction,
wherein the second active material structure comprises:
a third active material plate having a plurality of third penetration holes extending in a thickness direction of the third active material plate, and
a fourth active material plate on a side of the third active material plate,
and wherein at least a portion of the plurality of first penetration holes of the first active material plate and at least a portion of the plurality of third penetration holes of the third active material plate are not aligned in the first direction,
and optionally wherein the second active material plate has a plurality of second penetration holes extending in a thickness direction of the second active material plate, the fourth active material plate has a plurality of fourth penetration holes extending in a thickness direction of the fourth active material plate, at least a portion of the plurality of first penetration holes of the first active material plate and at least a portion of the plurality of second penetration holes of the second active material plate are aligned in the first direction, and at least a portion of the plurality of third penetration holes of the third active material plate and at least a portion of the plurality of fourth penetration holes of the fourth active material plate are aligned in the first direction.

5. The electrode structure of any preceding claim, further comprising an additional active material plate having a plurality of additional penetration holes extending in a thickness direction of the additional active material plate,
wherein the additional active material plate is on one or more of an uppermost surface or a lowermost surface of the first active material structure.

6. The electrode structure of any preceding claim,
wherein the first active material plate and the second active material plate are binder-free.

7. The electrode structure of any preceding claim,
wherein the second active material plate comprises an upper active material plate and a lower active material plate, and the first active material plate, the lower active material plate, and the upper active material plate are stacked in the first direction,
and optionally wherein the first active material plate has a first porosity, the lower active material plate has a second porosity, the upper active material plate has a third porosity, the first porosity is less than the second porosity, and the first porosity is less than the third porosity,
and further optionally wherein the second porosity is equal to the third porosity, or the second porosity is less than the third porosity.

8. The electrode structure of claim 7,
Wherein the first active material plate, the lower active material plate, and the upper active material plate comprise a same positive electrode active material.

9. The electrode structure of claim 8,
wherein one or more of the first active material plate, the lower active material plate, and the upper active material plate comprise a conductive material,
and optionally wherein the conductive material comprises one or more of Al, Cu, Ni, Co, Cr, W, Mo, Ag, Au, Pt, or Pb.

10. The electrode structure of any preceding claim,
wherein a sum of each area of the plurality of first penetration holes on the side of the first active material plate on which the second active material plate is stacked is 1% to 5% of a total area of the side of the first active material plate on which the second active material plate is stacked.

11. A secondary battery comprising:
a first electrode structure according to any preceding claim;
a second electrode structure on the first electrode structure; and
a separation membrane between the first electrode structure and the second electrode structure,
wherein the first electrode structure comprises an active material structure, and the active material structure comprises:
a first active material plate having a plurality of first penetration holes extending in a thickness direction of the first active material plate; and
a second active material plate stacked in a first direction on a side of the first active material plate,
and optionally further comprising a positive electrode current collecting layer on a side of the active material structure,
and further optionally comprising a plurality of the active material structures, and further comprising an electrolyte material between active material structures of the plurality of active material structures.

12. A method of fabricating an electrode structure according to claim 1, the method comprising:
providing a first active material plate;
drilling a plurality of first penetration holes in the first active material plate, the plurality of the first penetration holes extending in a thickness direction of the first active material plate;
stacking a second active material plate on a side of the first active material plate in a first direction to form a first active material structure;
stacking a second active material structure on the first active material structure; and
sintering the first active material structure and the second active material structure to fabricate the electrode structure.

13. The method of fabricating an electrode structure of claim 12,
wherein the drilling of the plurality of first penetration holes comprises laser drilling.

## Patentansprüche

1. Elektrodenstruktur (10), umfassend:
eine erste Aktivmaterialstruktur (100), die Folgendes umfasst:
eine erste Aktivmaterialplatte (101) mit einer Vielzahl von ersten Durchgangslöchern (114), die sich in einer Dickenrichtung der ersten Aktivmaterialplatte erstrecken; und
eine zweite Aktivmaterialplatte (102), die auf einer Seite der ersten Aktivmaterialplatte in einer ersten Richtung gestapelt ist,
wobei die zweite Aktivmaterialplatte eine Vielzahl von zweiten Durchgangslöchern (115-1) aufweist, die sich in einer Dickenrichtung der zweiten Aktivmaterialplatte erstrecken, und
wobei mindestens ein Teil der Vielzahl von ersten Durchgangslöchern und mindestens ein Teil der Vielzahl von zweiten Durchgangslöchern in der ersten Richtung ausgerichtet sind, und
**dadurch gekennzeichnet, dass** ein Verhältnis einer Summe von Volumina der Vielzahl von ersten Durchgangslöchern zu einer Summe von Volumina von Poren in der zweiten Aktivmaterialplatte 0,2:1 bis 7:1 beträgt.

2. Elektrodenstruktur nach Anspruch 1, ferner umfassend eine zweite Aktivmaterialstruktur, die auf der ersten Aktivmaterialstruktur in der ersten Richtung gestapelt ist,
wobei die zweite Aktivmaterialstruktur Folgendes umfasst:
eine dritte Aktivmaterialplatte mit einer Vielzahl von dritten Durchgangslöchern, die sich in einer Dickenrichtung der dritten Aktivmaterialplatte erstrecken, und
eine vierte Aktivmaterialplatte auf einer Seite der dritten Aktivmaterialplatte,
und wobei mindestens ein Teil der Vielzahl von ersten Durchgangslöchern der ersten Aktivmaterialplatte und mindestens ein Teil der Vielzahl von dritten Durchgangslöchern der dritten Aktivmaterialplatte in der ersten Richtung ausgerichtet sind.

3. Elektrodenstruktur nach Anspruch 2, wobei die zweite Aktivmaterialplatte eine Vielzahl von zweiten Durchgangslöchern aufweist, die sich in einer Dickenrichtung der zweiten Aktivmaterialplatte erstrecken, die vierte Aktivmaterialplatte eine Vielzahl von vierten Durchgangslöchern aufweist, die sich in einer Dickenrichtung der vierten Aktivmaterialplatte erstrecken, mindestens ein Teil der Vielzahl von ersten Durchgangslöchern der ersten Aktivmaterialplatte und mindestens ein Teil der Vielzahl von zweiten Durchgangslöchern der zweiten Aktivmaterialplatte nicht in der ersten Richtung ausgerichtet sind und mindestens ein Teil der Vielzahl von dritten Durchgangslöchern der dritten Aktivmaterialplatte und mindestens ein Teil der Vielzahl von vierten Durchgangslöchern der vierten Aktivmaterialplatte nicht in der ersten Richtung ausgerichtet sind.

4. Elektrodenstruktur nach Anspruch 1, ferner umfassend eine zweite Aktivmaterialstruktur, die auf der ersten Aktivmaterialstruktur in der ersten Richtung gestapelt ist,
wobei die zweite Aktivmaterialstruktur Folgendes umfasst:
eine dritte Aktivmaterialplatte mit einer Vielzahl von dritten Durchgangslöchern, die sich in einer Dickenrichtung der dritten Aktivmaterialplatte erstrecken, und
eine vierte Aktivmaterialplatte auf einer Seite der dritten Aktivmaterialplatte,
und wobei mindestens ein Teil der Vielzahl von ersten Durchgangslöchern der ersten Aktivmaterialplatte und mindestens ein Teil der Vielzahl von dritten Durchgangslöchern der dritten Aktivmaterialplatte nicht in der ersten Richtung ausgerichtet sind,
und optional wobei die zweite Aktivmaterialplatte eine Vielzahl von zweiten Durchgangslöchern aufweist, die sich in einer Dickenrichtung der zweiten Aktivmaterialplatte erstrecken, die vierte Aktivmaterialplatte eine Vielzahl von vierten Durchgangslöchern aufweist, die sich in einer Dickenrichtung der vierten Aktivmaterialplatte erstrecken, mindestens ein Teil der Vielzahl von ersten Durchgangslöchern der ersten Aktivmaterialplatte und mindestens ein Teil der Vielzahl von zweiten Durchgangslöchern der zweiten Aktivmaterialplatte in der ersten Richtung ausgerichtet sind und mindestens ein Teil der Vielzahl von dritten Durchgangslöchern der dritten Aktivmaterialplatte und mindestens ein Teil der Vielzahl von vierten Durchgangslöchern der vierten Aktivmaterialplatte in der ersten Richtung ausgerichtet sind.

5. Elektrodenstruktur nach einem vorhergehenden Anspruch, ferner umfassend eine zusätzliche Aktivmaterialplatte mit einer Vielzahl von zusätzlichen Durchgangslöchern, die sich in einer Dickenrichtung der zusätzlichen Aktivmaterialplatte erstrecken,
wobei sich die zusätzliche Aktivmaterialplatte auf einer oder mehreren von einer obersten Oberfläche oder einer untersten Oberfläche der ersten Aktivmaterialstruktur befindet.

6. Elektrodenstruktur nach einem vorhergehenden Anspruch,
wobei die erste Aktivmaterialplatte und die zweite Aktivmaterialplatte bindemittelfrei sind.

7. Elektrodenstruktur nach einem vorhergehenden Anspruch,
wobei die zweite Aktivmaterialplatte eine obere Aktivmaterialplatte und eine untere Aktivmaterialplatte umfasst und die erste Aktivmaterialplatte, die untere Aktivmaterialplatte und die obere Aktivmaterialplatte in der ersten Richtung gestapelt sind,
und optional wobei die erste Aktivmaterialplatte eine erste Porosität aufweist, die untere Aktivmaterialplatte eine zweite Porosität aufweist, die obere Aktivmaterialplatte eine dritte Porosität aufweist, die erste Porosität kleiner als die zweite Porosität ist und die erste Porosität kleiner als die dritte Porosität ist,
und ferner optional wobei die zweite Porosität gleich der dritten Porosität ist oder die zweite Porosität kleiner als die dritte Porosität ist.

8. Elektrodenstruktur nach Anspruch 7,
wobei die erste Aktivmaterialplatte, die untere Aktivmaterialplatte und die obere Aktivmaterialplatte ein gleiches Positivelektrodenaktivmaterial umfassen.

9. Elektrodenstruktur nach Anspruch 8,
wobei eine oder mehrere von der ersten Aktivmaterialplatte, der unteren Aktivmaterialplatte und der oberen Aktivmaterialplatte ein leitendes Material umfassen,
und wobei das leitende Material optional eines oder mehrere von Al, Cu, Ni, Co, Cr, W, Mo, Ag, Au, Pt oder Pb umfasst.

10. Elektrodenstruktur nach einem vorhergehenden Anspruch, wobei eine Summe jeder Fläche der Vielzahl von ersten Durchgangslöchern auf der Seite der ersten Aktivmaterialplatte, auf der die zweite Aktivmaterialplatte gestapelt ist, 1 % bis 5 % einer Gesamtfläche der Seite der ersten Aktivmaterialplatte, auf der die zweite Aktivmaterialplatte gestapelt ist, beträgt.

11. Sekundärbatterie, umfassend:
eine erste Elektrodenstruktur gemäß einem vorhergehenden Anspruch;
eine zweite Elektrodenstruktur auf der ersten Elektrodenstruktur; und
eine Trennmembran zwischen der ersten Elektrodenstruktur und der zweiten Elektrodenstruktur,
wobei die erste Elektrodenstruktur eine Aktivmaterialstruktur umfasst und die Aktivmaterialstruktur Folgendes umfasst:
eine erste Aktivmaterialplatte mit einer Vielzahl von ersten Durchgangslöchern, die sich in einer Dickenrichtung der ersten Aktivmaterialplatte erstrecken; und
eine zweite Aktivmaterialplatte, die in einer ersten Richtung auf einer Seite der ersten Aktivmaterialplatte gestapelt ist,
und optional ferner umfassend eine Positivelektrodenstromsammelschicht auf einer Seite der Aktivmaterialstruktur,
und ferner optional eine Vielzahl der Aktivmaterialstrukturen umfassend und ferner ein Elektrolytmaterial zwischen Aktivmaterialstrukturen der Vielzahl von Aktivmaterialstrukturen umfassend.

12. Verfahren zum Herstellen einer Elektrodenstruktur, gemäß Anspruch 1, wobei das Verfahren Folgendes umfasst:
Bereitstellen einer ersten Aktivmaterialplatte;
Bohren einer Vielzahl von ersten Durchgangslöchern in die erste Aktivmaterialplatte, wobei sich die Vielzahl der ersten Durchgangslöcher in einer Dickenrichtung der ersten Aktivmaterialplatte erstreckt;
Stapeln einer zweiten Aktivmaterialplatte auf eine Seite der ersten Aktivmaterialplatte in einer ersten Richtung, um eine erste Aktivmaterialstruktur auszubilden;
Stapeln einer zweiten Aktivmaterialstruktur auf die erste Aktivmaterialstruktur; und
Sintern der ersten Aktivmaterialstruktur und der zweiten Aktivmaterialstruktur, um die Elektrodenstruktur herzustellen.

13. Verfahren zum Herstellen einer Elektrodenstruktur nach Anspruch 12,
wobei das Bohren der Vielzahl von ersten Durchgangslöchern Laserbohren umfasst.

## Revendications

1. Structure d'électrode (10) comprenant :
une première structure de matériau actif (100), comprenant :
une première plaque de matériau actif (101) présentant une pluralité de premiers trous de pénétration (114) s'étendant dans une direction d'épaisseur de la première plaque de matériau actif ; et
une deuxième plaque de matériau actif (102) empilée sur un côté de la première plaque de matériau actif dans une première direction,
dans laquelle la deuxième plaque de matériau actif présente une pluralité de deuxièmes trous de pénétration (115-1) s'étendant dans une direction de l'épaisseur de la deuxième plaque de matériau actif, et
dans laquelle au moins une partie de la pluralité de premiers trous de pénétration et au moins une partie de la pluralité de deuxièmes trous de pénétration sont alignés dans la première direction, et
**caractérisée en ce qu'**un rapport d'une somme de volumes de la pluralité de premiers trous de pénétration sur une somme de volumes de pores dans la deuxième plaque de matériau actif est de 0,2:1 à 7:1.

2. Structure d'électrode selon la revendication 1, comprenant en outre une seconde structure de matériau actif empilée sur la première structure de matériau actif dans la première direction,
dans laquelle la seconde structure de matériau actif comprend :
une troisième plaque de matériau actif présentant une pluralité de troisièmes trous de pénétration s'étendant dans une direction de l'épaisseur de la troisième plaque de matériau actif, et
une quatrième plaque de matériau actif sur un côté de la troisième plaque de matériau actif,
et dans laquelle au moins une partie de la pluralité de premiers trous de pénétration de la première plaque de matériau actif et au moins une partie de la pluralité de troisièmes trous de pénétration de la troisième plaque de matériau actif sont alignés dans la première direction.

3. Structure d'électrode de la revendication 2, dans laquelle la deuxième plaque de matériau actif présente une pluralité de deuxièmes trous de pénétration s'étendant dans une direction de l'épaisseur de la deuxième plaque de matériau actif, la quatrième plaque de matériau actif présente une pluralité de quatrièmes trous de pénétration s'étendant dans une direction de l'épaisseur de la quatrième plaque de matériau actif, au moins une partie de la pluralité de premiers trous de pénétration de la première plaque de matériau actif et au moins une partie de la pluralité de deuxièmes trous de pénétration de la deuxième plaque de matériau actif ne sont pas alignés dans la première direction, et au moins une partie de la pluralité de troisièmes trous de pénétration de la troisième plaque de matériau actif et au moins une partie de la pluralité de quatrièmes trous de pénétration de la quatrième plaque de matériau actif ne sont pas alignés dans la première direction.

4. Structure d'électrode selon la revendication 1, comprenant en outre une seconde structure de matériau actif empilée sur la première structure de matériau actif dans la première direction,
dans laquelle la seconde structure de matériau actif comprend :
une troisième plaque de matériau actif présentant une pluralité de troisièmes trous de pénétration s'étendant dans une direction de l'épaisseur de la troisième plaque de matériau actif, et
une quatrième plaque de matériau actif sur un côté de la troisième plaque de matériau actif,
et dans laquelle au moins une partie de la pluralité de premiers trous de pénétration de la première plaque de matériau actif et au moins une partie de la pluralité de troisièmes trous de pénétration de la troisième plaque de matériau actif ne sont pas alignés dans la première direction,
et éventuellement dans laquelle la deuxième plaque de matériau actif présente une pluralité de deuxièmes trous de pénétration s'étendant dans une direction de l'épaisseur de la deuxième plaque de matériau actif, la quatrième plaque de matériau actif présente une pluralité de quatrièmes trous de pénétration s'étendant dans une direction de l'épaisseur de la quatrième plaque de matériau actif, au moins une partie de la pluralité de premiers trous de pénétration de la première plaque de matériau actif et au moins une partie de la pluralité de deuxièmes trous de pénétration de la deuxième plaque de matériau actif sont alignés dans la première direction, et au moins une partie de la pluralité de troisièmes trous de pénétration de la troisième plaque de matériau actif et au moins une partie de la pluralité de quatrièmes trous de pénétration de la quatrième plaque de matériau actif sont alignés dans la première direction.

5. Structure d'électrode d'une quelconque revendication précédente, comprenant en outre une plaque de matériau actif supplémentaire présentant une pluralité de trous de pénétration supplémentaires s'étendant dans une direction de l'épaisseur de la plaque de matériau actif supplémentaire,
dans laquelle la plaque de matériau actif supplémentaire est sur une ou plusieurs d'une surface la plus haute ou d'une surface la plus basse de la première structure de matériau actif.

6. Structure d'électrode d'une quelconque revendication précédente,
dans laquelle la première plaque de matériau actif et la deuxième plaque de matériau actif sont exemptes de liant.

7. Structure d'électrode d'une quelconque revendication précédente,
dans laquelle la deuxième plaque de matériau actif comprend une plaque de matériau actif haute et une plaque de matériau actif basse, et la première plaque de matériau actif, la plaque de matériau actif basse et la plaque de matériau actif haute sont empilées dans la première direction,
et éventuellement dans laquelle la première plaque de matériau actif présente une première porosité, la plaque de matériau actif basse présente une deuxième porosité, la plaque de matériau actif haute présente une troisième porosité, la première porosité est inférieure à la deuxième porosité et la première porosité est inférieure à la troisième porosité,
et en outre éventuellement dans laquelle la deuxième porosité est égale à la troisième porosité, ou la deuxième porosité est inférieure à la troisième porosité.

8. Structure d'électrode de la revendication 7,
dans laquelle la première plaque de matériau actif, la plaque de matériau actif basse et la plaque de matériau actif haute comprennent un même matériau actif d'électrode positive.

9. Structure d'électrode de la revendication 8,
dans laquelle une ou plusieurs de la première plaque de matériau actif, de la plaque de matériau actif basse et de la plaque de matériau actif haute comprennent un matériau conducteur,
et éventuellement dans laquelle le matériau conducteur comprend un ou plusieurs éléments parmi Al, Cu, Ni, Co, Cr, W, Mo, Ag, Au, Pt ou Pb.

10. Structure d'électrode d'une quelconque revendication précédente,
dans laquelle une somme de chaque aire de la pluralité de premiers trous de pénétration sur le côté de la première plaque de matériau actif sur laquelle la deuxième plaque de matériau actif est empilée est de 1 % à 5 % d'une aire totale du côté de la première plaque de matériau actif sur laquelle la deuxième plaque de matériau actif est empilée.

11. Batterie secondaire comprenant :
une première structure d'électrode selon une quelconque revendication précédente ;
une seconde structure d'électrode sur la première structure d'électrode ; et
une membrane de séparation entre la première structure d'électrode et la seconde structure d'électrode,
dans laquelle la première structure d'électrode comprend une structure de matériau actif, et la structure de matériau actif comprend :
une première plaque de matériau actif présentant une pluralité de premiers trous de pénétration s'étendant dans une direction d'épaisseur de la première plaque de matériau actif ; et
une deuxième plaque de matériau actif empilée dans une première direction sur un côté de la première plaque de matériau actif,
et comprenant en outre éventuellement une couche de collecte de courant d'électrode positive sur un côté de la structure de matériau actif,
et comprenant en outre éventuellement une pluralité des structures de matériau actif, et comprenant en outre un matériau électrolytique entre des structures de matériau actif de la pluralité de structures de matériau actif.

12. Procédé de fabrication d'une structure d'électrode,
selon la revendication 1, le procédé comprenant :
la fourniture d'une première plaque de matériau actif ;
le perçage d'une pluralité de premiers trous de pénétration dans la première plaque de matériau actif, la pluralité des premiers trous de pénétration s'étendant dans une direction d'épaisseur de la première plaque de matériau actif ;
l'empilement d'une deuxième plaque de matériau actif sur un côté de la première plaque de matériau actif dans une première direction pour former une première structure de matériau actif ;
l'empilement d'une seconde structure de matériau actif sur la première structure de matériau actif ; et
le frittage de la première structure de matériau actif et de la seconde structure de matériau actif pour fabriquer la structure d'électrode.

13. Procédé de fabrication d'une structure d'électrode de la revendication 12,
dans laquelle le perçage de la pluralité de premiers trous de pénétration comprend un perçage au laser.
